# EUROPEAN PATENT APPLICATION

(11) **EP 3 950 622 A1**
(43) Date of publication of application: **09.02.2022**
(21) Application number: 20783378.1
(22) Date of filing: 18.03.2020
(51) Int. Cl.: C03C 10/12

(54) **LI2O-AL2O3-SIO2-BASED CRYSTALLIZED GLASS**

(30) Priority: 01.04.2019 JP 2019069795; 28.05.2019 JP 2019099252
(71) Applicant: Nippon Electric Glass Co., Ltd., Otsu-shi, Shiga 520-8639 (JP)
(72) Inventor: YOKOTA Yuki, Otsu-shi Shiga 520-8639 (JP); HIRANO Shotaro, Otsu-shi Shiga 520-8639 (JP); TOJO Shin, Otsu-shi Shiga 520-8639 (JP)
(74) Representative: Tetzner, Michael
(86) International application number: PCT/JP2020/012038
(87) International publication number: WO 2020/203308

(57) **Abstract**

Provided is a Li₂O-Al₂O₃-SiO₂-based crystallized glass that has a high permeability to light in a ultraviolet to infrared range and is less likely to be broken. A Li₂O-Al₂O₃-SiO₂-based crystallized glass contains, in terms of % by mass, 40 to 90% SiO₂, 5 to 30% Al₂O₃, 1 to 10% Li₂O, 0 to 20% SnO₂, 0 to 5% ZrO₂, 0 to 10% MgO, 0 to 10% P₂O₅, and 0 to 4% TiO₂ and a mass ratio of Li₂O/(MgO+CaO+SrO+BaO+Na₂O+K₂O) is 3 or less.

## Description

### [Technical Field]

The present invention relates to Li₂O-Al₂O₃-SiO₂-based crystallized glasses.

### [Background Art]

In recent years, portable electronic devices, such as cellular phones, notebook-size personal computers, and PDAs (personal data assistances), are being required to reduce their size and weight. With the above trend, the packaging space for semiconductor chips for use in these electronic devices is being severely restricted and, therefore, high-density packaging of semiconductor chips is a challenge. To this end, high-density packaging of semiconductor packages is sought by three-dimensional packaging technology, i.e., by stacking semiconductor chips and interconnecting the semiconductor chips by wiring.

As disclosed in Patent Literature 1, fan-out wafer-level packaging (WLP) includes, after molding a plurality of semiconductor chips with a resin seal material to form a fabricated substrate, the step of forming wiring on one surface of the fabricated substrate and the step of forming solder bumps thereon. These steps involve heat treatment at approximately 200°C, which may cause the seal material to deform and thus cause the fabricated substrate to change in dimension. In order to reduce the dimensional change of the fabricated substrate, it is effective to use a support substrate for supporting the fabricated substrate. In order to effectively reduce the dimensional change of the fabricated substrate having relatively low expansion, the support substrate may be required to have low expansion characteristics.

To cope with this, it is considered to use as the support substrate a Li₂O-Al₂O₃-SiO₂-based crystallized glass in which Li₂O-Al₂O₃-SiO₂-based crystals, such as a β-quartz solid solution (Li₂O·Al₂O₃·nSiO₂ [where 2 ≤ n ≤ 4]) or a β-spodumene solid solution (Li₂O·Al₂O₃·nSiO₂ [where n ≥ 4]), which are low-expansion crystals, are precipitated as a major crystalline phase.

### [Citation List]

### [Patent Literature]

[PTL 1]
Japanese Patent Application No. 2014-255236

### [Summary of Invention]

### [Technical Problem]

However, a Li₂O-Al₂O₃-SiO₂-based crystallized glass in which a β-spodumene solid solution is precipitated as a major crystalline phase has a low permeability to light in a ultraviolet to infrared range and, therefore, has a problem that it has difficulty transmitting laser light (ultraviolet to infrared light) for use in fixing or separating a fabricated substrate to or from a glass substrate. Furthermore, a Li₂O-Al₂O₃-SiO₂-based crystallized glass in which a β-quartz solid solution is precipitated as a major crystalline phase has a large amount of volume contraction when the crystals are precipitated from a parent glass and, therefore, has a problem that it is likely to cause breakage, such as surface delamination or cracks.

An object of the present invention is to provide a Li₂O-Al₂O₃-SiO₂-based crystallized glass that has a high permeability to light in a ultraviolet to infrared range and is less likely to be broken.

### [Solution to Problem]

A Li₂O-Al₂O₃-SiO₂-based crystallized glass according to the present invention contains, in terms of % by mass, 40 to 90% SiO₂, 5 to 30% Al₂O₃, 1 to 10% Li₂O, 0 to 20% SnO₂, 0 to 5% ZrO₂, 0 to 10% MgO, 0 to 10% CaO, 0 to 10% SrO, 0 to 10% BaO, 0 to 10% Na₂O, 0 to 10% K₂O, 0 to 10% P₂O5, and 0 to 4% TiO₂ and a mass ratio of Li₂O/ (MgO+CaO+SrO+BaO+Na₂O+K₂O) is 3 or less. The term "Li₂O/ (MgO+CaO+SrO+BaO+Na₂O+K₂O) " used herein refers to the value of the content of Li₂O divided by the total content of MgO, CaO, SrO, BaO, Na₂O, and K₂O.

The Li₂O-Al₂O₃-SiO₂-based crystallized glass according to the present invention preferably contains, in terms of % by mass, 0 to 10% ZnO and 0 to 10% B₂O₃.

The Li₂O-Al₂O₃-SiO₂-based crystallized glass according to the present invention preferably further contains, in terms of % by mass, 0.10% or less Fe₂O₃.

In the Li₂O-Al₂O₃-SiO₂-based crystallized glass according to the present invention, a mass ratio of MgO/ (Li₂O+MgO) is preferably 0.15 or more. The term "MgO/ (/Li₂O+MgO) " used herein refers to the value of the content of MgO divided by the total content of Li₂O and MgO.

The Li₂O-Al₂O₃-SiO₂-based crystallized glass according to the present invention preferably contains, in terms of % by mass, 2% or more MgO+CaO+SrO+BaO+Na₂O+K₂O. The term "MgO+CaO+SrO+BaO+Na₂O+K₂O)" used herein refers to the total content of MgO, CaO, SrO, BaO, Na₂O, and K₂O.

The Li₂O-Al₂O₃-SiO₂-based crystallized glass according to the present invention preferably contains, in terms of % by mass, 1.5 to 6.7% ZrO₂+TiO₂. The term "ZrO₂+TiO₂" used herein refers to the total content of ZrO₂ and TiO₂.

In the Li₂O-Al₂O₃-SiO₂-based crystallized glass according to the present invention, a mass ratio of (SiO₂+Al₂O₃+Li₂O) /SiO₂ is preferably less than 1.553. The term " (SiO₂+Al₂O₃+L1₂O) /SiO₂" used herein refers to the value of the total content of SiO₂, Al₂O₃, and Li₂O divided by the content of SiO₂.

In the Li₂O-Al₂O₃-SiO₂-based crystallized glass according to the present invention, a mass ratio of (SiO₂+Al₂O₃+Li₂O)/Al₂O₃ is preferably more than 3.251. The term " (SiO₂+Al₂O₃+Li₂O)/Al₂O₃" used herein refers to the value of the total content of SiO₂, Al₂O₃, and Li₂O divided by the content of Al₂O₃.

In the Li₂O-Al₂O₃-SiO₂-based crystallized glass according to the present invention, a mass ratio of ZrO₂/Li₂O is preferably 0.4 or more. The term "ZrO₂/Li₂O" used herein refers to the value of the content of ZrO₂ divided by the content of Li₂O.

In the Li₂O-Al₂O₃-SiO₂-based crystallized glass according to the present invention, a mass ratio of ZrO₂/(SnO₂+TiO₂) is preferably 0.092 or more. The term "ZrO₂/(SnO₂+TiO₂)" used herein refers to the value of the content of ZrO₂ divided by the total content of SnO₂ and TiO₂.

In the Li₂O-Al₂O₃-SiO₂-based crystallized glass according to the present invention, a mass ratio of ZnO/(ZnO+MgO) is preferably 0.9 or less. The term "ZnO/(ZnO+MgO)" used herein refers to the value of the content of ZnO divided by the total content of ZnO and MgO.

In the Li₂O-Al₂O₃-SiO₂-based crystallized glass according to the present invention, a mass ratio of (Li₂O+Na₂O+K₂)/ZrO₂ is preferably 3.0 or less. The term " (Li₂O+Na₂O+K₂O)/ZrO₂" used herein refers to the value of the total content of Li₂O, Na₂O, and K₂O divided by the content of ZrO₂.

In the Li₂O-Al₂O₃-SiO₂-based crystallized glass according to the present invention, a mass ratio of TiO₂/ZrO₂ is preferably 0.0001 to 5.0. The term "TiO₂/ZrO₂" used herein refers to the value of the content of TiO₂ divided by the content of ZrO₂.

In the Li₂O-Al₂O₃-SiO₂-based crystallized glass according to the present invention, a mass ratio of TiO₂/(TiO₂+Fe₂O₃) is preferably 0.001 to 0.999. The term "TiO₂/(TiO₂+Fe₂O₃) " used herein refers to the value of the content of TiO₂ divided by the total content of TiO₂ and Fe₂O₃.

The Li₂O-Al₂O₃-SiO₂-based crystallized glass according to the present invention preferably contains, in terms of % by mass, less than 0.05% HfO₂+Ta₂O₅. The term "HfO₂+Ta₂O₅" used herein refers to the total content of HfO₂ and Ta₂O₅.

The Li₂O-Al₂O₃-SiO₂-based crystallized glass according to the present invention preferably contains, in terms of % by mass, 7 ppm or less Pt.

The Li₂O-Al₂O₃-SiO₂-based crystallized glass according to the present invention preferably contains, in terms of % by mass, 7 ppm or less Rh.

The Li₂O-Al₂O₃-SiO₂-based crystallized glass according to the present invention preferably contains, in terms of % by mass, 9 ppm or less Pt+Rh. The term "Pt+Rh" used herein refers to the total content of Pt and Rh.

In the Li₂O-Al₂O₃-SiO₂-based crystallized glass according to the present invention, a β-quartz solid solution is preferably precipitated as a major crystalline phase. Thus, a crystallized glass having a high permeability to light in a ultraviolet to infrared range and a low coefficient of thermal expansion can be easily obtained.

The Li₂O-Al₂O₃-SiO₂-based crystallized glass according to the present invention preferably has a coefficient of thermal expansion of -20 × 10⁻⁷/°C to 30 × 10⁻⁷/°C at 20 to 200°C. Thus, the crystallized glass can be suitably used for various applications requiring low expansibility.

The Li₂O-Al₂O₃-SiO₂-based crystallized glass according to the present invention preferably has a coefficient of thermal expansion of -20 × 10⁻⁷/°C to 30 × 10⁻⁷/°C at 20 to 380°C.

The Li₂O-Al₂O₃-SiO₂-based crystallized glass according to the present invention preferably has a coefficient of thermal expansion of -20 × 10⁻⁷/°C to 30 × 10⁻⁷/°C at 20 to 750°C. Thus, the crystallized glass can be suitably used for various applications requiring low expansibility over a wide temperature range.

The Li₂O-Al₂O₃-SiO₂-based crystallized glass according to the present invention preferably has a transparent appearance.

The Li₂O-Al₂O₃-SiO₂-based crystallized glass according to the present invention preferably has a transmittance of 1% or more at a thickness of 2 mm and a wavelength of 360 nm. Thus, the crystallized glass can be suitably used for various applications requiring permeability to ultraviolet light.

The Li₂O-Al₂O₃-SiO₂-based crystallized glass according to the present invention preferably has a transmittance of 10% or more at a thickness of 2 mm and a wavelength of 555 nm. Thus, the crystallized glass can be suitably used for various applications requiring permeability to visible light.

The Li₂O-Al₂O₃-SiO₂-based crystallized glass according to the present invention preferably has a transmittance of 35% or more at a thickness of 2 mm and a wavelength of 1200 nm. Thus, the crystallized glass can be suitably used for various applications requiring permeability to infrared light.

The Li₂O-Al₂O₃-SiO₂-based crystallized glass according to the present invention preferably has a liquidus temperature of 1500°C or below/

The Li₂O-Al₂O₃-SiO₂-based crystallized glass according to the present invention preferably has a rate of density change of 1.1 to 10% between before and after crystallization.

The Li₂O-Al₂O₃-SiO₂-based crystallized glass according to the present invention preferably has a transmittance of 1% or more at a thickness of 2 mm and a wavelength of 360 nm and has a coefficient of thermal expansion of -10 × 10⁻⁷/°C to 30 × 10⁻⁷/°C at 20 to 200°C.

### [Advantageous Effects of Invention]

The present invention enables provision of a Li₂O-Al₂O₃-SiO₂-based crystallized glass that has a high permeability to light in a ultraviolet to infrared range and is less likely to be broken.

### [Description of Embodiments]

A Li₂O-Al₂O₃-SiO₂-based crystallized glass according to the present invention contains, in terms of % by mass, 40 to 90% SiO₂, 5 to 30% Al₂O₃, 1 to 10% Li₂O, 0 to 20% SnO₂, 0 to 5% ZrO₂, 0 to 10% MgO, 0 to 10% CaO, 0 to 10% SrO, 0 to 10% BaO, 0 to 10% Na₂O, 0 to 10% K₂O, 0 to 10% P₂O₅, and 0 to 4% TiO₂ and a mass ratio of Li₂O/ (MgO+CaO+SrO+BaO+Na₂O+K₂O) is 3 or less. Reasons why the glass composition is limited as just described will be described below. In the following description of the respective contents of components, "%" refers to "% by mass" unless otherwise stated.

SiO₂ is a component that forms part of a glass network and also constitutes part of a Li₂O-Al₂O₃-SiO₂-based crystal. The content of SiO₂ is preferably 40 to 90%, 50 to 85%, 52 to 83%, 55 to 80%, 55 to 75%, 55 to 73%, 55 to 71%, 56 to 70%, 57 to 70%, 58 to 70%, or 59 to 70%, and particularly preferably 60 to 70%. If the content of SiO₂ is too small, the coefficient of thermal expansion tends to increase, so that a crystallized glass having excellent thermal shock resistance is less likely to be obtained. In addition, the chemical durability tends to decrease. On the other hand, if the content of SiO₂ is too large, the meltability of glass decreases and the viscosity of glass melt increases, so that the glass becomes difficult to clarify and difficult to form into shape, which makes the productivity likely to decrease. Furthermore, cristobalite and tridymite crystals tend to be precipitated to devitrify the glass and the crystallized glass becomes susceptible to breakage. In addition, the time required for crystallization becomes long, so that the productivity is likely to decrease.

Al₂O₃ is a component that forms part of a glass network and also constitutes part of a Li₂O-Al₂O₃-SiO₂-based crystal. The content of Al₂O₃ is preferably 5 to 30%, 7 to 30%, 8 to 29%, 10 to 28%, 13 to 27%, 15 to 26%, 16 to 26%, 17 to 26%, 17 to 25%, 17 to 24%, 18 to 24%, 18.1 to 24%, or 19 to 24%, and particularly preferably 20 to 23%. If the content of Al₂O₃ is too small, the coefficient of thermal expansion tends to increase, so that a crystallized glass having excellent thermal shock resistance is less likely to be obtained. In addition, the chemical durability tends to decrease. On the other hand, if the content of Al₂O₃ is too large, the meltability of glass decreases and the viscosity of glass melt increases, so that the glass becomes difficult to clarify and difficult to form into shape, which makes the productivity likely to decrease. Furthermore, corundum and mullite crystals tend to be precipitated to devitrify the glass and the crystallized glass becomes susceptible to breakage.

Li₂O is a constituent of a Li₂O-Al₂O₃-SiO₂-based crystal, and a component that largely influences the crystallinity and reduces the viscosity of glass to increase the meltability and formability of the glass. The content of Li₂O is preferably 1 to 10%, 2 to 10%, 2 to 9%, 2 to 8%, 2 to 7%, 2.5 to 6%, 2.5 to 5%, or 3 to 4.5%, and particularly preferably 3 to 4%. If the content of Li₂O is too small, mullite crystals tend to be precipitated to devitrify the glass. In addition, in crystallizing the glass, Li₂O-Al₂O₃-SiO₂-based crystals are less likely to be precipitated, so that a crystallized glass having excellent thermal shock resistance is difficult to obtain. Furthermore, the meltability of glass decreases and the viscosity of glass melt increases, so that the glass becomes difficult to clarify and difficult to form into shape, which makes the productivity likely to decrease. On the other hand, if the content of Li₂O is too large, the crystallinity is excessively high, so that the glass tends to be likely to devitrify and the crystallized glass becomes susceptible to breakage.

By adjusting ratios on SiO₂, Al₂O₃, and Li₂O (i.e., (SiO₂+Al₂O₃+Li₂O)/SiO₂ and (SiO₂+Al₂O₃+Li₂O)/Al₂O₃), the above-described cristobalite, tridymite, corundum, mullite, and like crystals can be less likely to be precipitated, which reduces the devitrification of the glass. (SiO₂+Al₂O₃+Li₂O) /SiO₂ is preferably less than 1.553, 1.55 or less, 1.547 or less, 1.544 or less, 1.54 or less, 1.537 or less, 1.534 or less, 1.53 or less, 1.527 or less, 1.524 or less, 1.52 or less, 1.517 or less, 1.514 or less, 1.51 or less, 1.507 or less, 1.504 or less, 1.500 or less, 1.497 or less, 1.494 or less, 1.49 or less, 1.487 or less, 1.484 or less, 1.48 or less, 11.477 or less, 1.474 or less, 1.47 or less, 1.467 or less, 1.464 or less, 1.46 or less, 1.459 or less, 1.458 or less, 1.457 or less, 1.456 or less, 1.455 or less, 1.454 or less, 1.453 or less, 1.452 or less, or 1.451 or less, and particularly preferably 1.45 or less, and (SiO₂+Al₂O₃+Li₂O)/Al₂O₃ is preferably more than 3.251, 3.255 or more, 3.26 or more, 3.265 or more, 3.27 or more, 3.275 or more, 3.28 or more, 3.285 or more, 3.29 or more, 3.295 or more, 3.3 or more, 3.305 or more, 3.31 or more, 3.315 or more, 3.32 or more, 3.325 or more, 3.33 or more, 3.335 or more, 3.34 or more, 3.341 or more, 3.342 or more, 3.343 or more, 3.344 or more, 3.345 or more, 3.346 or more, 3.347 or more, 3.348 or more, or 3.349 or more, and particularly preferably 3.35 or more.

SnO₂ is a component acting as a fining agent. Furthermore, SnO₂ is also a nucleating component for precipitating crystals in the crystallization process. On the other hand, SnO₂ is also a component that, if it is contained much, significantly increases the tinting of the glass. The content of SnO₂ is preferably 0 to 20%, 0 to 10%, 0 to 8%, 0.01 to 8%, 0.01 to 5%, 0.01 to 4%, 0.05 to 3%, 0.05 to 2.5%, 0.05 to 2%, 0.05 to 1.5%, 0.05 to 1.3%, 0.05 to 1.2%, 0.05 to 1%, 0.05 to 0.8%, or 0.05 to 0.6%, and particularly preferably 0.05 to 0.5%. If the content of SnO₂ is too large, the tinting of the crystallized glass increases.

ZrO₂ is a nucleating component for precipitating crystals in the crystallization process. The content of ZrO₂ is preferably 0 to 5%, 0 to 4.5%, 0 to 4%, 0 to 3.5%, 0 to 3%, over 0 to 3%, 0.1 to 2.9%, 0.2 to 2.9%, 0.3 to 2.9%, 0.4 to 2.9%, 0.5 to 2.9%, 0.6 to 2.9%, 0.7 to 2.9%, 0.8 to 2.9%, 0.9 to 2.9%, 1 to 2.9%, 1.1 to 2.9%, 1.2 to 2.9%, 1.3 to 2.9%, 1.4 to 2.9%, 1.4 to 2.8%, 1.4 to 2.7%, 1.4 to 2.6%, or 1.5 to 2.6%, and particularly preferably 1.6 to 2.6%. If the content of ZrO₂ is too large, coarse ZrO₂ crystals precipitate to make the glass devitrifiable and make the crystallized glass susceptible to breakage.

MgO is a component that can be incorporated into Li₂O-Al₂O₃-SiO₂-based crystals to form a solid solution together and increases the coefficient of thermal expansion of the Li₂O-Al₂O₃-SiO₂-based crystals . The content of MgO is preferably 0 to 10%, 0 to 9%, 0 to 8%, 0 to 7%, 0 to 6%, 0 to 5%, 0 to 4%, 0 to 3%, 0 to 2%, 0 to 1%, or 0 to 0.5%, and particularly preferably over 0 to 0.5%. If the content of MgO is too large, the crystallinity becomes excessively high to make the glass devitrifiable and make the crystallized glass susceptible to breakage. Furthermore, the coefficient of thermal expansion tends to be excessively high.

CaO is a component that reduces the viscosity of glass to increase the meltability and formability of the glass. Furthermore, CaO is also a component for controlling the coefficient of thermal expansion and refractive index of the crystallized glass. In addition, CaO is a component that can be incorporated into Li₂O-Al₂O₃-SiO₂-based crystals to form a solid solution together. The content of CaO is preferably 0 to 10%, 0 to 9%, 0 to 8%, 0 to 7%, 0 to 6%, 0 to 5%, 0 to 4%, 0 to 3%, 0 to 2%, or 0 to 1%, and particularly preferably 0 to 0.5%. If the content of CaO is too large, the glass is likely to devitrify and the crystallized glass becomes susceptible to breakage. Furthermore, the ionic radius of a Ca cation is greater than those of a Li cation, a Mg cation, and so on being constituents of the major crystalline phase, and, therefore, the Ca cation is less likely to be incorporated into the crystal, so that Ca cations after crystallization are likely to remain in the remaining glass. For this reason, if the content of CaO is too large, a difference in refractive index between the crystalline phase and the remaining glass phase is likely to occur, so that the crystallized glass tends to be likely to be cloudy. However, CaO is likely to be mixed as impurities into the glass. Therefore, if complete removal of CaO is pursued, the raw material batch tends to be expensive to increase the production cost. In order to reduce the increase in production cost, the lower limit of the content of CaO is preferably 0.0001% or more, more preferably 0.0003% or more, and particularly preferably 0.0005% or more.

SrO is a component that reduces the viscosity of glass to increase the meltability and formability of the glass. Furthermore, SrO is also a component for controlling the coefficient of thermal expansion and refractive index of the crystallized glass. In addition, SrO is a component that can be incorporated into Li₂O-Al₂O₃-SiO₂-based crystals to form a solid solution together. The content of SrO is preferably 0 to 10%, 0 to 9%, 0 to 8%, 0 to 7%, 0 to 6%, 0 to 5%, 0 to 4%, 0 to 3%, 0 to 2%, or 0 to 1%, and particularly preferably 0 to 0.5%. If the content of SrO is too large, the glass is likely to devitrify and the crystallized glass becomes susceptible to breakage. Furthermore, the ionic radius of a Sr cation is greater than those of a Li cation, a Mg cation, and so on being constituents of the major crystalline phase, and, therefore, the Sr cation is less likely to be incorporated into the crystal, so that Sr cations after crystallization are likely to remain in the remaining glass. For this reason, if the content of SrO is too large, a difference in refractive index between the crystalline phase and the remaining glass phase is likely to occur, so that the crystallized glass tends to be likely to be cloudy. However, SrO is likely to be mixed as impurities into the glass. Therefore, if complete removal of SrO is pursued, the raw material batch tends to be expensive to increase the production cost. In order to reduce the increase in production cost, the lower limit of the content of SrO is preferably 0.0001% or more, more preferably 0.0003% or more, and particularly preferably 0.0005% or more.

BaO is a component that reduces the viscosity of glass to increase the meltability and formability of the glass. Furthermore, BaO is also a component for controlling the coefficient of thermal expansion and refractive index of the crystallized glass. In addition, BaO is a component that can be incorporated into Li₂O-Al₂O₃-SiO₂-based crystals to form a solid solution together. The content of BaO is preferably 0 to 10%, 0 to 9%, 0 to 8%, 0 to 7%, 0 to 6%, 0 to 5%, 0 to 4%, 0 to 3%, 0 to 2%, or 0 to 1%, and particularly preferably 0 to 0.5%. If the content of BaO is too large, crystals containing Ba precipitate to make the glass devitrifiable and make the crystallized glass susceptible to breakage. Furthermore, the ionic radius of a Ba cation is greater than those of a Li cation, a Mg cation, and so on being constituents of the major crystalline phase, and, therefore, the Ba cation is less likely to be incorporated into the crystal, so that Ba cations after crystallization are likely to remain in the remaining glass. For this reason, if the content of BaO is too large, a difference in refractive index between the crystalline phase and the remaining glass phase is likely to occur, so that the crystallized glass tends to be likely to be cloudy. However, BaO is likely to be mixed as impurities into the glass. Therefore, if complete removal of BaO is pursued, the raw material batch tends to be expensive to increase the production cost. In order to reduce the increase in production cost, the lower limit of the content of BaO is preferably 0.0001% or more, more preferably 0.0003% or more, and particularly preferably 0.0005% or more.

Na₂O is a component that can be incorporated into Li₂O-Al₂O₃-SiO₂-based crystals to form a solid solution together, and a component that largely influences the crystallinity and reduces the viscosity of glass to increase the meltability and formability of the glass. Furthermore, Na₂0 is a component for controlling the coefficient of thermal expansion and refractive index of the crystallized glass. The content of Na₂0 is preferably 0 to 10%, 0 to 9%, 0 to 8%, 0 to 7%, 0 to 6%, 0 to 5%, 0 to 4%, 0 to 3%, 0 to 2%, or 0 to 1%, and particularly preferably 0 to 0.5%. If the content of Na₂0 is too large, the crystallinity is excessively high, so that the glass is likely to devitrify and the crystallized glass becomes susceptible to breakage. However, Na₂O is likely to be mixed as impurities into the glass. Therefore, if complete removal of Na₂0 is pursued, the raw material batch tends to be expensive to increase the production cost. In order to reduce the increase in production cost, the lower limit of the content of Na₂O is preferably 0.0003% or more, more preferably 0.0005% or more, and particularly preferably 0.001% or more.

K₂O is a component that can be incorporated into Li₂O-Al₂O₃-SiO₂-based crystals to form a solid solution together, and a component that largely influences the crystallinity and reduces the viscosity of glass to increase the meltability and formability of the glass. Furthermore, K₂O is a component for controlling the coefficient of thermal expansion and refractive index of the crystallized glass. The content of K₂O is preferably 0 to 10%, 0 to 9%, 0 to 8%, 0 to 7%, 0 to 6%, 0 to 5%, 0 to 4%, 0 to 3%, 0 to 2%, or 0 to 1%, and particularly preferably 0 to 0.5%. If the content of K₂O is too large, the crystallinity is excessively high, so that the glass is likely to devitrify and the crystallized glass becomes susceptible to breakage. Furthermore, the ionic radius of a K cation is greater than those of a Li cation, a Mg cation, and so on being constituents of the major crystalline phase, and, therefore, the K cation is less likely to be incorporated into the crystal, so that K cations after crystallization are likely to remain in the remaining glass. For this reason, if the content of K₂O is too large, a difference in refractive index between the crystalline phase and the remaining glass phase is likely to occur, so that the crystallized glass tends to be likely to be cloudy. However, K₂O is likely to be mixed as impurities into the glass. Therefore, if complete removal of K₂O is pursued, the raw material batch tends to be expensive to increase the production cost. In order to reduce the increase in production cost, the lower limit of the content of K₂O is preferably 0.0003% or more, more preferably 0.0005% or more, and particularly preferably 0.001% or more.

In Li₂O-Al₂O₃-SiO₂-based crystallized glasses, if there is a large difference in coefficient of thermal expansion between the crystalline phase and the remaining glass phase after the completion of crystallization, breakage, such as surface delamination or cracks from the sample inside, may occur. If the solid solubility of Li in Li₂O-Al₂O₃-SiO₂-based crystals is excessively large, the amount of volume contraction during crystallization becomes large, so that the coefficient of thermal expansion of the crystalline phase after the completion of crystallization becomes excessively low and, therefore, a large difference in coefficient of thermal expansion between the crystalline phase and the remaining glass phase is likely to occur. As a result, the crystallized glass is likely to cause breakage, such as surface delamination or cracks. For this reason, MgO/(Li₂O+MgO) is preferably 0.15 or more, 0.151 or more, 0.152 or more, 0.153 or more, 0.154 or more, 0.155 or more, 0.156 or more, 0.157 or more, 0.158 or more, 0.159 or more, 0.16 or more, 0.161 or more, 0.162 or more, 0.163 or more, 0.164 or more, 0.165 or more, 0.166 or more, 0.167 or more, 0.168 or more, or 0.169 or more, and particularly preferably 0.170 or more, and Li₂O/(MgO+CaO+SrO+BaO+Na₂O+K₂O) is preferably 3 or less, 2.9 or less, 2.8 or less, 2.7 or less, 2.6 or less, 2.5 or less, 2.4 or less, 2.3 or less, 2.2 or less, 2.1 or less, 2 or less, 1.95 or less, 1.9 or less, 1.85 or less, 1.8 or less, 1.75 or less, 1.7 or less, 1.65 or less, 1.6 or less, 1.55 or less, 1.5 or less, 1.45 or less, 1.4 or less, 1.35 or less, 1.3 or less, 1.25 or less, 1.2 or less, 1.15 or less, 1.1 or less, 1.09 or less, 1.08 or less, 1.07 or less, 1.06 or less, 1.05 or less, 1.04 or less, 1.03 or less, 1.02 or less, or 1.01 or less, and particularly preferably 1 or less. The upper limit of MgO/(Li₂O+MgO) is preferably not more than 0.9 and the lower limit of Li₂O/(MgO+CaO+SrO+BaO+Na₂O+K₂O) is preferably not less than 0.01.

Although Li₂O, Na₂O, and K₂O are components that increase the meltability and formability of the glass, if the contents of these components are too large, the low-temperature viscosity excessively decreases, so that the glass may excessively flow during crystallization. Furthermore, Li₂O, Na₂O, and K₂O are components that may deteriorate the weather resistance, water resistance, chemical resistance, and so on of the glass before crystallization. If the glass before crystallization is deteriorated by moisture or so on, a desired crystallization behavior and, as a result, desired properties may not be obtained. On the other hand, ZrO₂ is a component that functions as a nucleating agent and has the effect of preferentially crystallizing in an initial stage of crystallization to reduce the flow of the remaining glass. Furthermore, ZrO₂ has the effect of efficiently filling the voids of the glass network principally involving a SiO₂ skeleton to block the diffusion of protons, various chemical components, and so on in the glass network, thus increasing the weather resistance, water resistance, chemical resistance, and so on of the glass before crystallization. In order to obtain a crystallized glass having a desired shape and desired properties, (Li₂O+Na₂O+K₂O)/ZrO₂ should be suitably controlled. The ratio (Li₂O+Na₂O+K₂O)/ZrO₂ is preferably 3.0 or less, 2.8 or less, 2.6 or less, 2.5 or less, 2.45 or less, 2.4 or less, 2.3 or less, 2.2 or less, 2.1 or less, or 2.05 or less, and particularly preferably 2 or less.

Furthermore, MgO+CaO+SrO+BaO+Na₂O+K₂O is preferably 2.0 or more, 2.1 or more, 2.2 or more, 2.3 or more, 2.4 or more, 2.41 or more, 2.42 or more, 2.43 or more, 2.44 or more, 2.45 or more, 2.46 or more, 2.47 or more, 2.48 or more, or 2.49 or more, and particularly preferably 2.5 or more. If MgO+CaO+SrO+BaO+Na₂O+K₂O is too small, the coefficient of thermal expansion of the crystallized glass tends to be excessively high or excessively low. The upper limit of MgO+CaO+SrO+BaO+Na₂O+K₂O is preferably not more than 40%.

ZrO₂ functions as a poorly soluble nucleating agent and Li₂O functions as a flux that promoting melting. Therefore, when ZrO₂/Li₂O is small, ZrO₂ can be efficiently melted. However, if ZrO₂/Li₂O is too small, the low-temperature viscosity excessively decreases, so that the glass becomes likely to flow in the nucleating process where heat treatment is performed at a relatively low temperature, which becomes a contributor to deformation. Furthermore, the excessive decrease in low-temperature viscosity causes the rate of nucleation to be excessively high, which may make it difficult to control the nucleation process. Therefore, ZrO₂/Li₂O is preferably 0.4 or more, 0.42 or more, 0.44 or more, 0.46 or more, 0.48 or more, 0.50 or more, 0.52 or more, 0.53 or more, 0.54 or more, 0.55 or more, or 0.56 or more, and particularly preferably 0.57 or more. If ZrO₂/Li₂O is too large, poorly soluble ZrO₂ tends to be insufficiently solved and remain as a devitrified product. Therefore, the upper limit of ZrO₂/Li₂O is not more than 4.

Furthermore, Al₂O₃/(SnO₂+ZrO₂) is preferably more than 7.1, 7.2 or more, 7.3 or more, 7.4 or more, 7.5 or more, 7.6 or more, 7.7 or more, 7.8 or more, or 7.9 or more, and particularly preferably 8.0 or more. If Al₂O₃/(SnO₂+ZrO₂) is too small, the crystal nuclei become large, so that the crystallized glass is likely to be cloudy. This tendency is likely to emerge when the glass contains 0.2% or more TiO₂. If Al₂O₃/(SnO₂+ZrO₂) is too large, nucleation does not efficiently progress, so that crystallization may not efficiently progress. Therefore, the upper limit of Al₂O₃/(SnO₂+ZrO₂) is preferably not more than 25.

P₂O₅ is a component that suppresses the precipitation of coarse ZrO₂ crystals. Furthermore, P₂O₅ can be involved in the likelihood of phase separation during crystal nucleation. The content of P₂O₅ is preferably 0 to 10%, 0 to 9%, 0 to 8%, 0 to 7%, 0 to 6%, 0 to 5%, 0.1 to 5%, 0.2 to 4%, 0.2 to 3%, 0.3 to 3%, 0.3 to 2.5%, 0.4 to 2.5%, 0.5 to 2%, or 1 to 2%, and particularly preferably 1.2 to 1.8%. If the content of P₂O₅ is too large, the amount of Li₂O-Al₂O₃-SiO₂-based crystals precipitated becomes small, so that the coefficient of thermal expansion tends to increase.

TiO₂ is a nucleating component for precipitating crystals in the crystallization process. On the other hand, if TiO₂ is contained much in the glass, it significantly increases the tinting of the glass. Particularly, zirconia titanate-based crystals containing ZrO₂ and TiO₂ act as crystal nuclei, but electrons transition from the valence band of oxygen serving as a ligand to the conduction bands of zirconia and titanium serving as central metals (LMCT transition), which involves the tinting of the crystallized glass. Furthermore, if titanium remains in the remaining glass phase, LMCT transition may occur from the valence band of the SiO₂ skeleton to the conduction band of tetravalent titanium in the remaining glass phase. In addition, d-d transition occurs in trivalent titanium in the remaining glass phase, which involves the tinting of the crystallized glass. It is known that the coexistence of titanium and iron causes the glass to develop the tinting like ilmenite (FeTiO₃) and the coexistence of titanium and tin intensifies the yellowish tint of the glass. Therefore, the content of TiO₂ is preferably 0 to 4%, 0 to 3.8%, 0 to 3.6%, 0 to 3.4%, 0 to 3.2%, 0 to 3%, over 0 to 3%, 0.01 to 3%, 0.05 to 3%, 0.07 to 3%, 0.09 to 3%, 0.1 to 3%, or 0.2 to 3%, and particularly preferably 0.3 to 3%.

TiO₂ and ZrO₂ are components that can each function as a crystal nucleus. Ti and Zr are congeners and are similar in electronegativity and ionic radius. Therefore, these elements are likely to take similar molecular conformations as oxides and the coexistence of TiO₂ and ZrO₂ is known to facilitate the occurrence of phase separation in the initial stage of crystallization. Hence, within a permissible range of tinting, TiO₂/ZrO₂ is preferably 0.0001 to 5.0, 0.0001 to 4.0, 0.0001 to 3.0, 0.0001 to 2.5, 0.0001 to 2.0, 0.0001 to 1.5, 0.0001 to 1.0, 0.0001 to 0.97, or 0.0001 to 0.95, and particularly preferably 0.0001 to 0.92. If TiO₂/ZrO₂ is too small, the raw material batch becomes expensive to increase the production cost. On the other hand, if TiO₂/ZrO₂ is too large, the rate of crystal nucleation becomes low, so that the production cost may increase.

In Li₂O-Al₂O₃-SiO₂-based crystallized glasses, phase separated regions are formed in the glass sample prior to crystal nucleation and, then, crystal nuclei made of HO₂, ZrO₂, and so on are formed in the phase separated regions. ZrO₂+TiO₂ is preferably 1.5 to 6.7%, 1.8 to 6.7%, 2.1 to 6.7%, 2.4 to 6.7%, 2.8 to 6.7%, 2.81 to 6.7%, 2.81 to 6.6%, 2.81 to 6.5%, 2.81 to 6.4%, 2.81 to 6.3%, 2.82 to 6.2%, 2.83 to 6.1%, 2.84 to 6%, 2.85 to 5.9%, 2.86 to 5.8%, 2.87 to 5.7%, 2.88 to 5.6%, 2.89 to 5.5%, 2.9 to 5.4%, 2.9 to 5.3%, or 2.9 to 5.2%, and particularly preferably 2.9 to 5.1%. If ZrO₂+TiO₂ is too small, the crystal nuclei are less likely to be formed and crystallization is less likely to progress. On the other hand, if ZrO₂+TiO₂ is too large, the phase separated regions become large, so that the crystallized glass is likely to be cloudy.

SnO₂ and TiO₂ can be involved in nucleation. It is known that, in the initial stage of nucleation of a bulk crystallized glass, nucleating components are separated in phase prior to precipitation of crystals forming nuclei. Furthermore, phase separation is more likely to occur when the glass contains a plurality of components relevant to the phase separation than when the glass contains a single component relevant to the phase separation. Therefore, SnO₂/(SnO₂+TiO₂)is preferably 0.092 or more, 0.093 or more, 0.094 or more, 0.095 or more, 0.096 or more, 0.097 or more, 0.098 or more, or 0.099 or more, and particularly preferably 0.100 or more. Since it is better for the glass to contain a plurality of components relevant to the phase separation, the upper limit of SnO₂/(SnO₂+TiO₂) is preferably less than 1.

The Li₂O-Al₂O₃-SiO₂-based crystallized glass according to the present invention may contain, in addition to the above components, the following components in its glass composition.

ZnO is a component that can be incorporated into Li₂O-Al₂O₃-SiO₂-based crystals to form a solid solution together and largely influences the crystallinity. Furthermore, ZnO is a component for controlling the coefficient of thermal expansion and refractive index of the crystallized glass. The content of ZnO is preferably 0 to 10%, 0 to 9%, 0 to 8%, 0 to 7%, 0 to 6%, 0 to 5%, 0 to 4%, 0 to 3%, 0 to 2%, or 0 to 1%, and particularly preferably 0 to 0.5%. If the content of ZnO is too large, the crystallinity becomes excessively high to make the glass devitrifiable and make the crystallized glass susceptible to breakage. However, ZnO is likely to be mixed as impurities into the glass. Therefore, if complete removal of ZnO is pursued, the raw material batch tends to be expensive to increase the production cost. In order to reduce the increase in production cost, the lower limit of the content of ZnO is preferably 0.0001% or more, more preferably 0.0003% or more, and particularly preferably 0.0005% or more.

ZnO and MgO not only each function as a flux during formation of a glass melt but also are each incorporated into a β-quartz solid solution that will be a major crystalline phase to form a solid solution together and thus change the coefficient of thermal expansion of the crystallized glass. As just described, ZnO and MgO are expected to have similar effects. However, ZnO is more likely to be expensive in raw material cost compared to MgO. Therefore, ZnO/(MgO+ZnO) is preferably 0.9 or less, more preferably 0.8 or less, and particularly preferably 0.7 or less, and ZnO/MgO is preferably 0.5 or less, 0.49 or less, 0.48 or less, 0.47 or less, or 0.46 or less, and particularly preferably 0.45 or less.

B₂O₃ is a component that reduces the viscosity of glass to increase the meltability and formability of the glass. Furthermore, B₂O₃ can be involved in the likelihood of phase separation during crystal nucleation. The content of B₂O₃ is preferably 0 to 10%, 0 to 9%, 0 to 8%, 0 to 7%, 0 to 6%, 0 to 5%, 0 to 4%, 0 to 3%, 0 to 2%, or 0 to 1%, and particularly preferably 0 to 0.5%. If the content of B₂O₃ is too large, the glass is likely to devitrify and the crystallized glass becomes susceptible to breakage. Furthermore, the amount of B₂O₃ evaporated during melting becomes large, so that the environmental burden increases. However, B₂O₃ is likely to be mixed as impurities into the glass. Therefore, if complete removal of B₂O₃ is pursued, the raw material batch tends to be expensive to increase the production cost. In order to reduce the increase in production cost, the glass may contain B₂O₃ in an amount of 0.0001% or more, 0.0003% or more, or particularly 0.0005% or more.

Fe₂O₃ is a component that increases the tinting of the glass and, particularly, a component that significantly increases the tinting by interactions with TiO₂ and SnO₂. The content of Fe₂O₃ is preferably 0.10% or less, 0.08% or less, 0.06% or less, 0.05% or less, 0.04% or less, 0.035% or less, 0.03% or less, 0.02% or less, 0.015% or less, 0.013% or less, 0.012% or less, 0.011% or less, 0.01% or less, 0.009% or less, 0.008% or less, 0.007% or less, 0.006% or less, 0.005% or less, 0.004% or less, or 0.003% or less, and particularly preferably 0.002% or less. However, Fe₂O₃ is likely to be mixed as impurities into the glass. Therefore, if complete removal of Fe₂O₃ is pursued, the raw material batch tends to be expensive to increase the production cost. In order to reduce the increase in production cost, the lower limit of the content of Fe₂O₃ is preferably 0.0001% or more, 0.0002% or more, 0.0003% or more, or 0.0005% or more, and particularly preferably 0.001% or more.

In the case of coexistence of titanium and iron, the tinting like ilmenite (FeTiO₃) may develop. Particularly, in Li₂O-Al₂O₃-SiO₂-based crystallized glasses, titanium and iron components not precipitated as crystal nuclei or major crystals may remain in the remaining glass after crystallization to facilitate the development of the tinting. These components may be able to be reduced in amount in terms of design. However, because TiO₂ and Fe₂O₃ are likely to be mixed as impurities into the glass, if complete removal of them is pursued, the raw material batch tends to be expensive to increase the production cost. Therefore, in order to reduce the production cost, the glass may contain TiO₂ and Fe₂O₃ within the above-described ranges . In order to further reduce the production cost, the glass may contain both the components within a permissible range of tinting. In this case, TiO₂/ (TiO₂+Fe₂O₃) is preferably 0.001 to 0.999, 0.001 to 0.998, 0.003 to 0.997, 0.005 to 0.995, 0.007 to 0.993, 0.009 to 0.991, 0.01 to 0.99, 0.01 to 0.95, or 0.01 to 0.92, and particularly preferably 0.01 to 0.88.

Pt is a component that can be incorporated in a state of ions, colloid, metal or so on into the glass and causes the glass to develop a yellowish to ginger tint. Furthermore, this tendency is significant after crystallization. In addition, intensive studies have shown that the incorporation of Pt may cause the crystallized glass to be influenced in nucleation and crystallizing behavior, so that the crystallized glass may be likely to be cloudy. Therefore, the content of Pt is preferably 7 ppm or less, 6 ppm or less, 5 ppm or less, 4 ppm or less, 3 ppm or less, 2 ppm or less, 1.6 ppm or less, 1.4 ppm or less, 1.2 ppm or less, 1 ppm or less, 0.9 ppm or less, 0.8 ppm or less, 0.7 ppm or less, 0.6 ppm or less, 0.5 ppm or less, 0.45 ppm or less, 0.4 ppm or less, or 0.35 ppm or less, and particularly preferably 0.3 ppm or less. Although the incorporation of Pt should be avoided as much as possible, there may be a case where, with the use of general melting facilities, Pt members need to be used in order to obtain a homogeneous glass. Therefore, if complete removal of Pt is pursued, the production cost tends to increase. So long as the tinting is permitted, in order to reduce the increase in production cost, the lower limit of the content of Pt is preferably 0.0001 ppm or more, 0.001 ppm or more, 0.005 ppm or more, 0.01 ppm or more, 0.02 ppm or more, 0.03 ppm or more, 0.04 ppm or more, 0.05 ppm or more, or 0.06 ppm or more, and particularly preferably 0.07 ppm or more. Furthermore, in the absence of any adverse effect in terms of tinting, Pt may be used as a nucleating agent for promoting the precipitation of the major crystalline phase, as with ZrO₂ or TiO₂. In doing so, Pt may be used alone as a nucleating agent or used as a nucleating agent in combination with other components . In using Pt as a nucleating agent, its form (colloid, metallic crystals or so on) is not particularly limited.

Rh is a component that can be incorporated in a state of ions, colloid, or metal or so on into the glass and tends to cause the glass to develop a yellowish to ginger tint and make the crystallized glass cloudy, like Pt. Therefore, the content of Rh is preferably 7 ppm or less, 6 ppm or less, 5 ppm or less, 4 ppm or less, 3 ppm or less, 2 ppm or less, 1.6 ppm or less, 1.4 ppm or less, 1.2 ppm or less, 1 ppm or less, 0.9 ppm or less, 0.8 ppm or less, 0.7 ppm or less, 0.6 ppm or less, 0.5 ppm or less, 0.45 ppm or less, 0.4 ppm or less, or 0.35 ppm or less, and particularly preferably 0.3 ppm or less. Although the incorporation of Rh should be avoided as much as possible, there may be a case where, with the use of general melting facilities, Rh members need to be used in order to obtain a homogeneous glass. Therefore, if complete removal of Rh is pursued, the production cost tends to increase. So long as the tinting is permitted, in order to reduce the increase in production cost, the lower limit of the content of Rh is preferably 0.0001 ppm or more, 0.001 ppm or more, 0.005 ppm or more, 0.01 ppm or more, 0.02 ppm or more, 0.03 ppm or more, 0.04 ppm or more, 0.05 ppm or more, or 0.06 ppm or more, and particularly preferably 0.07 ppm or more. Furthermore, so long as the tinting is permitted, Rh may be used as a nucleating agent, as with ZrO₂ or TiO₂. In doing so, Rh may be used alone as a nucleating agent or used as a nucleating agent in combination with other components . In using Rh as a nucleating agent, its form (colloid, metallic crystals or so on) is not particularly limited.

In addition, Pt+Rh is preferably 9 ppm or less, 8 ppm or less, 7 ppm or less, 6 ppm or less, 5 ppm or less, 4.75 ppm or less, 4.5 ppm or less, 4.25 ppm or less, 4 ppm or less, 3.75 ppm or less, 3.5 ppm or less, 3.25 ppm or less, 3 ppm or less, 2.75 ppm or less, 2.5 ppm or less, 2.25 ppm or less, 2 ppm or less, 1.75 ppm or less, 1.5 ppm or less, 1.25 ppm or less, 1 ppm or less, 0.95 ppm or less, 0.9 ppm or less, 0.85 ppm or less, 0.8 ppm or less, 0.75 ppm or less, 0.7 ppm or less, 0.65 ppm or less, 0.6 ppm or less, 0.55 ppm or less, 0.5 ppm or less, 0.45 ppm or less, 0.4 ppm or less, or 0.35 ppm or less, and particularly preferably 0.3 ppm or less. Although the incorporation of Pt and Rh should be avoided as much as possible, there may be a case where, with the use of general melting facilities, Pt members and Rh members need to be used in order to obtain a homogeneous glass. Therefore, if complete removal of Pt and Rh is pursued, the production cost tends to increase. So long as the tinting is permitted, in order to reduce the increase in production cost, the lower limit of Pt+Rh is preferably 0.0001 ppm or more, 0.001 ppm or more, 0.005 ppm or more, 0.01 ppm or more, 0.02 ppm or more, 0.03 ppm or more, 0.04 ppm or more, 0.05 ppm or more, or 0.06 ppm or more, and particularly preferably 0.07 ppm or more.

In developing a glass material, it is general to produce glasses having various compositions using various crucibles. Therefore, platinum and rhodium evaporated from crucibles are often present in the interior of an electric furnace for use in melting. It has been confirmed that Pt and Rh present in the interior of an electric furnace are incorporated into glass. In order to control the amount of Pt and Rh incorporated, not only the raw materials for use and the material for the crucible may be selected, but also a lid made of quartz may be fitted on the crucible or the melting temperature or melting time may be reduced. Thus, it is possible to control the content of Pt and Rh in the glass.

As₂O₃ and Sb₂O₃ are highly toxic and may contaminate the environment, for example, during the production process of glass or during treatment of waste glass. Therefore, the Li₂O-Al₂O₃-SiO₂-based crystallized glass according to the present invention is preferably substantially free of these components (specifically, the content of them is less than 0.1% by mass).

In the absence of any adverse effect in terms of tinting, the Li₂O-Al₂O₃-SiO₂-based crystallized glass according to the present invention may contain, in addition to the above components, minor components, including H₂, CO₂, CO, H₂O, He, Ne, Ar, and N₂, each up to 0.1%. Furthermore, when Ag, Au, Pd, Ir, V, Cr, Sc, Ce, Pr, Pm, Sm, Eu, Gd, Tb, Dy, Ho, Er, Tm, Yb, Lu, Ac, Th, Pa, U or so on is deliberately incorporated into the glass, the raw material cost increases, so that the production cost tends to increase. Meanwhile, when a glass containing Ag, Au or so on is subjected to light irradiation or heat treatment, agglomerates of these components are formed and crystallization can be promoted based on these agglomerates. Moreover, Pd and so on have various catalytic actions. When the glass contains these components, the glass and the crystallized glass can be given specific functions. In view of the above circumstances, when aimed at giving the function of promoting crystallization or other functions, the glass may contain each of the above components in an amount of 1% or less, 0.5% or less, 0.3% or less, or 0.1% or less. Otherwise, the glass contains each of the above components in a content of preferably 500 ppm or less, 300 ppm or less, or 100 ppm or less, and particularly preferably 10 ppm or less.

Furthermore, in the absence of any adverse effect in terms of tinting, the Li₂O-Al₂O₃-SiO₂-based crystallized glass according to the present invention may contain SO₃, MnO, Cl₂, Y₂O₃, MoO₃, La₂O₃, WO₃, HfO₂, Ta₂O₅, Nd₂O₃, Nb₂O₅, RfO₂, and so on up to 10% in total. However, the raw material batch of the above components is expensive, so that the production cost tends to increase. Therefore, these components may not be incorporated into the glass unless the circumstances are exceptional. Particularly, HfO₂ involves a high raw material cost and Ta₂O₅ may become a conflict mineral. Therefore, the total content of these components is preferably 5% or less, 4% or less, 3% or less, 2% or less, 1% or less, 0.5% or less, 0.4% or less, 0.3% or less, 0.2% or less, 0.1% or less, 0.05% or less, less than 0.05%, 0.049% or less, 0.048% or less, 0.047% or less, or 0.046% or less, and particularly preferably 0.045% or less.

Taken together, a preferred composition range in implementing the Li₂O-Al₂O₃-SiO₂-based crystallized glass according to the present invention is 50 to 70% SiO₂, 20 to 25% Al₂O₃, 1 to 6% Li₂O, 0 to 1.5% SnO₂, 0 to 5% ZrO₂, 0 to 5% MgO, 0 to 5% CaO, 0 to 5% SrO, 0 to 5% BaO, 0 to 5% Na₂O, 0 to 5% K₂O, 0 to 5% P₂O₅, 0 to 4% HO₂, 3 or less Li₂O/ (MgO+CaO+SrO+BaO+Na₂O+K₂O), 0 to 2 (Li₂O+Na₂O+K₂O)/ZrO₂, 0.0001 to 0.92 TiO₂/ZrO₂, and 0.01 to 0.99 TiO₂/ (TiO₂+Fe₂O₃) , preferably 50 to 70% SiO₂, 20 to 25% Al₂O₃, 1 to 6% Li₂O, 0 to 0.5% SnO₂, 0 to 5% ZrO₂, 0 to 5% MgO, 0 to 5% CaO, 0 to 5% SrO, 0 to 5% BaO, 0 to 5% Na₂O, 0 to 5% K₂O, 0 to 5% P₂O₅, 0 to 4% HO₂, 0 to 0.1% Fe₂O₃, 3 or less Li₂O/(MgO+CaO+SrO+BaO+Na₂O+K₂O), 0 to 1.8 (Li₂O+Na₂O+K₂O)/ZrO₂, 0.0001 to 0.92 TiO₂/ZrO₂, and 0.01 to 0.99 TiO₂/(TiO₂+Fe₂O₃), more preferably 50 to 70% SiO₂, 20 to 25% Al₂O₃, 1 to 6% Li₂O, 0 to 0.5% SnO₂, 0 to 5% ZrO₂, 0 to 5% MgO, 0 to 5% CaO, 0 to 5% SrO, 0 to 5% BaO, 0 to 5% Na₂O, 0 to 5% K₂O, 0 to 5% P₂O₅, 0 to 4% TiO₂, 0 to 0.1% Fe₂O₃, 3 or less Li₂O/(MgO+CaO+SrO+BaO+Na₂O+K₂O), 0 to 1.560 (Li₂O+Na₂O+K₂O)/ZrO₂, 0.0001 to 0.92 TiO₂/ZrO₂, 0.01 to 0.99 TiO₂/(TiO₂+Fe₂O₃), and 0 to 5 ppm Pt+Rh, still more preferably 50 to 70% SiO₂, 20 to 25% Al₂O₃, 0 to 3% B₂O₃, 1 to 6% Li₂O, 0 to 0.5% SnO₂, 0 to 5% ZrO₂, 0 to 5% MgO, 0 to 2.5% CaO, 0 to 5% SrO, 0 to 5% BaO, 0 to 5% Na₂O, 0 to 5% K₂O, 0 to 5% P₂O₅, 0 to 4% TiO₂, 0 to 0.1% Fe₂O₃, 3 or less Li₂O/(MgO+CaO+SrO+BaO+Na₂O+K₂O), 0 to 1.5 (Li₂O+Na₂O+K₂O)/ZrO₂, 0.0001 to 0.92 TiO₂/ZrO₂, 0.01 to 0.99 TiO₂/(TiO₂+Fe₂O₃) , and 0 to 5 ppm Pt+Rh, and most preferably 50 to 70% SiO₂, 20 to 23% Al₂O₃, 0 to 3% B₂O₃, 1 to 6% Li₂O, 0 to 0.5% SnO₂, 0 to 5% ZrO₂, 0 to 5% MgO, 0 to 2.5% CaO, 0 to 5% SrO, 0 to 5% BaO, 0 to 5% Na₂O, 0 to 5% K₂O, 0 to 2% P₂O₅, 0 to 4% TiO₂, 0 to 0.1% Fe₂O₃, 3 or less Li₂O/(MgO+CaO+SrO+BaO+Na₂O+K₂O), 0 to 1.5 (Li₂O+Na₂O+K₂O)/ZrO₂, 0.0001 to 0.92 TiO₂/ZrO₂, 0.01 to 0.99 TiO₂/(TiO₂+Fe₂O₃) , 0 to 5 ppm Pt+Rh, and 0 to below 0.05% HfO₂+Ta₂O₅.

The Li₂O-Al₂O₃-SiO₂-based crystallized glass according to the present invention having the above composition is likely to have a transparent appearance.

In the Li₂O-Al₂O₃-SiO₂-based crystallized glass according to the present invention, the transmittance at a thickness of 2 mm and a wavelength of 350 nm is preferably 1% or more, 2% or more, 3% or more, 4% or more, 5% or more, 6% or more, 7% or more, 8% or more, or 9% or more, and particularly preferably 10% or more, the transmittance at a thickness of 2 mm and a wavelength of 360 nm is preferably 1% or more, 5% or more, 10% or more, 15% or more, 20% or more, 25% or more, 30% or more, 35% or more, 36% or more, 37% or more, 38% or more, or 39% or more, and particularly preferably 40% or more, and the transmittance at a thickness of 2 mm and a wavelength of 370 nm is preferably 1% or more, 5% or more, 10% or more, 15% or more, 20% or more, 25% or more, 30% or more, 35% or more, 40% or more, 41% or more, 42% or more, 43% or more, 44% or more, 45% or more, 46% or more, 47% or more, 48% or more, or 49% or more, and particularly preferably 50% or more. In applications requiring to transmit ultraviolet light, if the transmittance at each of wavelengths of 350 nm, 360 nm, and 370 nm is too low, a desired transmission ability may not be able to be obtained. Particularly, in using a YAG laser or so on, the transmittance at each of wavelengths of 350 nm, 360 nm, and 370 nm is preferably higher.

In the Li₂O-Al₂O₃-SiO₂-based crystallized glass according to the present invention, the transmittance at a thickness of 2 mm and a wavelength of 380 nm is preferably 1% or more, 5% or more, 10% or more, 15% or more, 20% or more, 25% or more, 30% or more, 35% or more, 40% or more, 45% or more, 50% or more, 55% or more, 56% or more, 57% or more, 58% or more, or 59% or more, and particularly preferably 60% or more. If the transmittance at a wavelength of 380 nm is too low, yellowish tinting of the glass may be excessively high owing to the effect of light absorption or light scattering, and the transparency of the crystallized glass decreases, so that a desired transmission ability may not be able to be obtained.

In the Li₂O-Al₂O₃-SiO₂-based crystallized glass according to the present invention, the transmittance at a thickness of 2 mm and a wavelength of 555 nm is preferably 10% or more, 15% or more, 20% or more, 30% or more, 35% or more, 40% or more, 45% or more, 50% or more, 55% or more, 60% or more, 61% or more, 62% or more, 63% or more, 64% or more, 65% or more, 66% or more, 67% or more, 68% or more, or 69% or more, and particularly preferably 70% or more. If the transmittance at a wavelength of 555 nm is too low, the transparency is likely to become low.

In the Li₂O-Al₂O₃-SiO₂-based crystallized glass according to the present invention, the transmittance at a thickness of 2 mm and a wavelength of 800 nm is preferably 35% or more, 40% or more, 45% or more, 50% or more, 55% or more, 60% or more, 65% or more, 70% or more, 71% or more, 72% or more, 73% or more, 74% or more, 75% or more, 76% or more, 77% or more, 78% or more, or 79% or more, and particularly preferably 80% or more. If the transmittance at a wavelength of 800 nm is too low, the transparency is likely to become low.

In the Li₂O-Al₂O₃-SiO₂-based crystallized glass according to the present invention, the transmittance at a thickness of 2 mm and a wavelength of 1070 nm is preferably 35% or more, 40% or more, 45% or more, 50% or more, 55% or more, 60% or more, 65% or more, 70% or more, 75% or more, 76% or more, 77% or more, 78% or more, or 79% or more, and particularly preferably 80% or more, and the transmittance at a thickness of 2 mm and a wavelength of 1200 nm is preferably 35% or more, 40% or more, 45% or more, 50% or more, 55% or more, 60% or more, 65% or more, 70% or more, 75% or more, 76% or more, 77% or more, 78% or more, or 79% or more, and particularly preferably 80% or more. If the transmittance at each of wavelengths of 1070 nm and 1200 nm is too low, the glass is likely to become greenish.

In the Li₂O-Al₂O₃-SiO₂-based crystallized glass according to the present invention, the rate of transmittance change at a thickness of 2 mm and a wavelength of 360 nm between before and after crystallization is preferably 95% or less, 92.5% or less, 90% or less, 87.5% or less, 85% or less, 82.5% or less, 80% or less, 77.5% or less, 75% or less, 72.5% or less, 70% or less, or 68.5% or less, and particularly preferably 68% or less. By making the rate of transmittance change between before and after crystallization small, the transmittance after crystallization can be predicted and controlled before crystallization, so that a desired transmission ability can be easy obtained after crystallization. The rate of transmittance change between before and after crystallization is preferably smaller not only at a wavelength of 360 nm, but also over the entire wavelength range. The term "rate of transmittance change between before and after crystallization" means {((transmittance (%) before crystallization) - (transmittance (%) after crystallization))/(transmittance (%) before crystallization)} × 100 (%).

In the Li₂O-Al₂O₃-SiO₂-based crystallized glass according to the present invention, the lightness L* at a thickness of 2 mm is preferably 50 or more, 60 or more, 65 or more, 70 or more, 75 or more, 80 or more, 85 or more, 90 or more, 91 or more, 92 or more, or 93 or more, and particularly preferably 94 or more. If the lightness L* is too small, the glass tends to become grayish and look dark regardless of the magnitude of chromaticity.

In the Li₂O-Al₂O₃-SiO₂-based crystallized glass according to the present invention, the chromaticity a* at a thickness of 2 mm is preferably within ±7.0, within ±6.0, within ±5.0, within ±4.0, within ±3.0, within ±2.8, or within ±2.4, and particularly preferably within ±2. If the lightness a* is too negatively large, the glass tends to look greenish. If the lightness a* is too positively large, the glass tends to look reddish.

In the Li₂O-Al₂O₃-SiO₂-based crystallized glass according to the present invention, the chromaticity b* at a thickness of 2 mm is preferably within ±7.0, within ±6.0, within ±5.0, within ±4.0, within ±3.0, within ±2.8, or within ±2.4, and particularly preferably within ±2. If the lightness b* is too negatively large, the glass tends to look blueish. If the lightness b* is too positively large, the glass tends to look yellowish.

In the Li₂O-Al₂O₃-SiO₂-based crystallized glass according to the present invention, the strain point (the glass temperature corresponding to a glass viscosity of approximately 10^{14.5} dPa·s) in a glass state before crystallization is preferably 600°C or above, 605°C or above, 610°C or above, 615°C or above, 620°C or above, 630°C or above, 635°C or above, 640°C or above, 645°C or above, or 650°C or above, and particularly preferably 655°C or above. If the strain point temperature is too low, the glass before crystallization becomes breakable during forming into shape.

In the Li₂O-Al₂O₃-SiO₂-based crystallized glass according to the present invention, the annealing point (the glass temperature corresponding to a glass viscosity of approximately 10¹³ dPa·s) in a glass state before crystallization is preferably 680°C or above, 685°C or above, 690°C or above, 695°C or above, 700°C or above, 705°C or above, 710°C or above, 715°C or above, or 720°C or above, and particularly preferably 725°C or above. If the annealing point temperature is too low, the glass before crystallization becomes breakable during forming into shape.

In the Li₂O-Al₂O₃-SiO₂-based crystallized glass according to the present invention, a β-quartz solid solution is preferably precipitated as a major crystalline phase. When a β-quartz solid solution is precipitated as a major crystalline phase, its crystal grain size is likely to be 100 nm or less, so that the permeability to light in a ultraviolet to infrared range is easily increased. In addition, the coefficient of thermal expansion of the crystallized glass can be easily lowered.

In the Li₂O-Al₂O₃-SiO₂-based crystallized glass according to the present invention, the coefficient of thermal expansion at 20 to 200°C is preferably -20 × 10⁻⁷/°C to 30 × 10⁻⁷/°C, -10 × 10⁻⁷/°C to 30 × 10⁻⁷/°C, -9 × 10⁻⁷/°C to 30 × 10⁻⁷/°C, -8 × 10⁻⁷/°C to 30 × 10⁻⁷/°C, -7 × 10⁻⁷/°C to 30 × 10⁻⁷/°C, -6 × 10⁻⁷/°C to 30 × 10⁻⁷/°C, -5 × 10⁻⁷/°C to 30 × 10⁻⁷/°C, -5 × 10⁻⁷/°C to 28 × 10⁻⁷/°C, -5 × 10⁻⁷/°C to 26 × 10⁻⁷/°C, or -4 × 10⁻⁷/°C to 25 × 10⁻⁷/°C, and particularly preferably -3 × 10⁻⁷/°C to 25 × 10⁻⁷/°C. If the coefficient of thermal expansion at 20 to 200°C is too low or too high, the dimensional change of the fabricated substrate is likely to be large.

In the Li₂O-Al₂O₃-SiO₂-based crystallized glass according to the present invention, the coefficient of thermal expansion at 20 to 380°C is preferably -20 × 10⁻⁷/°C to 30 × 10⁻⁷/°C, -10 × 10⁻⁷/°C to 30 × 10⁻⁷/°C, -9 × 10⁻⁷/°C to 30 × 10⁻⁷/°C, -8 × 10⁻⁷/°C to 30 × 10⁻⁷/°C, -7 × 10⁻⁷/°C to 30 × 10⁻⁷/°C, -6 × 10⁻⁷/°C to 30 × 10⁻⁷/°C, -5 × 10⁻⁷/°C to 30 × 10⁻⁷/°C, -5 × 10⁻⁷/°C to 28 × 10⁻⁷/°C, -5 × 10⁻⁷/°C to 26 × 10⁻⁷/°C, -4 × 10⁻⁷/°C to 25 × 10⁻⁷/°C, -3 × 10⁻⁷/°C to 25 × 10⁻⁷/°C, 2 × 10⁻⁷/°C to 25 × 10⁻⁷/°C, -1.5 × 10⁻⁷/°C to 25 × 10⁻⁷/°C, -1 × 10⁻⁷/°C to 25 × 10⁻⁷/°C, -0.5 × 10⁻⁷/°C to 25 × 10⁻⁷/°C, 0 to 25 × 10⁻⁷/°C, 0.5 × 10⁻⁷/°C to 25 × 10⁻⁷/°C, 1 × 10⁻⁷/°C to 25 × 10⁻⁷/°C, 1.5 × 10⁻⁷/°C to 25 × 10⁻⁷/°C, 2 × 10⁻⁷/°C to 25 × 10⁻⁷/°C, 2.5 × 10⁻⁷/°C to 25 × 10⁻⁷/°C, 2.5 × 10⁻⁷/°C to 24 × 10⁻⁷/°C, 2.5 × 10⁻⁷/°C to 23 × 10⁻⁷/°C, 2.5 × 10⁻⁷/°C to 22 × 10⁻⁷/°C, or 2.5 × 10⁻⁷/°C to 21 × 10⁻⁷/°C, and particularly preferably 2.5 × 10⁻⁷/°C to 20 × 10⁻⁷/°C. If the coefficient of thermal expansion at 20 to 380°C is too low or too high, the dimensional change of the fabricated substrate is likely to be large.

In the Li₂O-Al₂O₃-SiO₂-based crystallized glass according to the present invention, the coefficient of thermal expansion at 20 to 750°C is preferably -20 × 10⁻⁷/°C to 30 × 10⁻⁷/°C, -10 × 10⁻⁷/°C to 30 × 10⁻⁷/°C, -9 × 10⁻⁷/°C to 30 × 10⁻⁷/°C, -8 × 10⁻⁷/°C to 30 × 10⁻⁷/°C, -7 × 10⁻⁷/°C to 30 × 10⁻⁷/°C, -6 × 10⁻⁷/°C to 30 × 10⁻⁷/°C, -5 × 10⁻⁷/°C to 30 × 10⁻⁷/°C, -5 × 10⁻⁷/°C to 28 × 10⁻⁷/°C, -5 × 10⁻⁷/°C to 26 × 10⁻⁷/°C, -4 × 10⁻⁷/°C to 25 × 10⁻⁷/°C, -3 × 10⁻⁷/°C to 25 × 10⁻⁷/°C, 2 × 10⁻⁷/°C to 25 × 10⁻⁷/°C, -1.5 × 10⁻⁷/°C to 25 × 10⁻⁷/°C, -1 × 10⁻⁷/°C to 25 × 10⁻⁷/°C, -0.5 × 10⁻⁷/°C to 25 × 10⁻⁷/°C, 0 to 25 × 10⁻⁷/°C, 0.5 × 10⁻⁷/°C to 25 × 10⁻⁷/°C, 1 × 10⁻⁷/°C to 25 × 10⁻⁷/°C, 1.5 × 10⁻⁷/°C to 25 × 10⁻⁷/°C, 2 × 10⁻⁷/°C to 25 × 10⁻⁷/°C, 2.5 × 10⁻⁷/°C to 25 × 10⁻⁷/°C, 2.5 × 10⁻⁷/°C to 24 × 10⁻⁷/°C, 2.5 × 10⁻⁷/°C to 23 × 10⁻⁷/°C, 2.5 × 10⁻⁷/°C to 22 × 10⁻⁷/°C, or 2.5 × 10⁻⁷/°C to 21 × 10⁻⁷/°C, and particularly preferably 2.5 × 10⁻⁷/°C to 20 × 10⁻⁷/°C. If the coefficient of thermal expansion at 20 to 750°C is too low or too high, the dimensional change of the fabricated substrate is likely to be large.

In the Li₂O-Al₂O₃-SiO₂-based crystallized glass according to the present invention, the liquidus temperature is preferably below1500°C, 1495°C or below, 1490°C or below, 1485°C or below, 1480°C or below, 1475°C or below, 1470°C or below, 1465°C or below, 1460°C or below, 1455°C or below, 1450°C or below, 1445°C or below, 1444°C or below, 1443°C or below, 1442°C or below, or 1441°C or below, and particularly preferably 1440°C or below. If the liquidus temperature is too high, devitrified matters are likely to be produced in the molten glass. On the other hand, when the liquidus temperature is 1480°C or below, the glass can be easily produced by a roll process or the like. When the liquidus temperature is 1450°C or below, the glass can be easily produced by a casting process or the like. The liquidus temperature can be determined by a method of filling a ground sample in a platinum boat with approximately 120 × 20 × 10 mm, putting the boat into an electric furnace having a linear temperature gradient for 20 hours, determining by microscopy a portion where crystals have been precipitated, and calculating the temperature at the portion where crystals have been precipitated from the temperature gradient graph of the electric furnace.

In the Li₂O-Al₂O₃-SiO₂-based crystallized glass according to the present invention, the rate of density change between before and after crystallization is preferably 1.1 to 10%, 1.1 to 9%, 1.1 to 8%, 1.1 to 7%, 1.1 to 5.5%, 1.1 to 5.4%, 1.1 to 5.3%, 1.1 to 5.2%, 1.1 to 5.1%, 1.1 to 5%, or 1.2 to 5%, and particularly preferably 1.3 to 5%. If the rate of density change between before and after crystallization is too small, the glass is not sufficiently crystallized, so that a desired coefficient of thermal expansion is less likely to be achieved. On the other hand, if the rate of density change between before and after crystallization is too large, the amount of volume contraction during crystallization becomes large, so that breakage is likely to occur. The term "rate of density change between before and after crystallization" means {((density (g/cm³) after crystallization) - (density (g/cm³) before crystallization))/(density (g/cm³) before crystallization)} × 100 (%).

In the Li₂O-Al₂O₃-SiO₂-based crystallized glass according to the present invention, the Young's modulus is preferably 60 to 120 GPa, 70 to 110 GPa, 75 to 110 GPa, 75 to 105 GPa, or 80 to 105 GPa, and particularly preferably 80 to 100 GPa. If the Young's modulus is too low or too high, the crystallized glass becomes susceptible to breakage.

In the Li₂O-Al₂O₃-SiO₂-based crystallized glass according to the present invention, the modulus of rigidity is preferably 25 to 50 GPa, 27 to 48 GPa, or 29 to 46 GPa, and particularly preferably 30 to 45 GPa. If the modulus of rigidity is too low or too high, the crystallized glass becomes susceptible to breakage.

In the Li₂O-Al₂O₃-SiO₂-based crystallized glass according to the present invention, the Poisson's ratio is preferably 0.35 or less, 0.32 or less, 0.3 or less, 0.28 or less, or 0.26 or less, and particularly preferably 0.25 or less. If the Poisson's ratio is too large, the crystallized glass becomes susceptible to breakage.

The Li₂O-Al₂O₃-SiO₂-based crystallized glass according to the present invention may be subjected to chemical strengthening or other treatments. In relation to the treatment conditions for chemical strengthening treatment, the treatment time and treatment temperature are sufficient to be appropriately selected in consideration of the glass composition, the degree of crystallization, the type of molten salt, and so on. For example, for the purpose of facilitating chemical strengthening after crystallization, a glass composition containing much Na₂O, which will be contained in the remaining glass, may be selected or the degree of crystallization may be deliberately reduced. Furthermore, as to the molten salt, alkali metals, such as Li, Na, and K, may be contained singly or in combination. Moreover, aside from an ordinary single-step strengthening process, a multistep chemical strengthening process may be selected. Besides the above, the Li₂O-Al₂O₃-SiO₂-based crystallized glass according to the present invention may be treated by chemical strengthening or the like before crystallization, so that the content of Li₂O on the sample surface can be made smaller than inside of the sample. When such a glass is crystallized, the degree of crystallization on the sample surface becomes lower than inside of the sample, so that the coefficient of thermal expansion on the sample surface becomes relatively high and, thus, compressive stress due to a difference in thermal expansion can be applied to the sample surface. In addition, when the degree of crystallization on the sample surface is low, the amount of glass phase on the surface becomes large, so that the chemical resistance and gas barrier property can be increased depending on the selection of the glass composition.

Next, a description will be given of a method for producing a Li₂O-Al₂O₃-SiO₂-based crystallized glass according to the present invention.

First, a batch of raw materials prepared to provide a glass having the above-described composition is injected into a glass melting furnace, melted at 1500 to 1750°C, and then formed into shape. In glass melting, the flame fusion method using a burner, the electric melting method by electrical heating or so on may be used. Alternatively, melting using laser irradiation or plasma melting is also possible. Furthermore, the shape of the sample may be platy, fibrous, film-like, powdered, spherical, hollow or so on and is not particularly limited.

Next, the obtained crystallizable glass (a glass that can be crystallized) is subjected to heat treatment and thus crystallized. As crystallization conditions, nucleation is first performed at 700 to 950°C (preferably 750 to 900°C) for 0.1 to 100 hours (preferably 1 to 60 hours) and crystal growth is then performed at 800 to 1050°C (preferably 800 to 1000°C) for 0.1 to 50 hours (preferably 0.2 to 10 hours) . Thus, a transparent Li₂O-Al₂O₃-SiO₂-based crystallized glass having β-quartz solid solution crystals precipitated as a major crystalline phase therein can be obtained. The heat treatment may be performed at a specific temperature only, may be performed stepwise by holding the glass in two or more temperature levels or may be performed by the application of heat with a temperature gradient.

Furthermore, the crystallization may be promoted by applying sonic waves or electromagnetic waves to the glass. Moreover, the cooling of the crystallized glass in a high-temperature state may be performed at a cooling rate with a specific temperature gradient or in two or more levels of temperature gradients. In order to obtain a sufficient thermal shock resistance, it is desirable to control the cooling rate to sufficiently structurally relax the remaining glass phase. The average cooling rate from 800°C to 25°C is, in an innermost portion of the crystallized glass thickness farthest from the surface, preferably 3000°C/min, 1000°C/min or slower, 500°C/min or slower, 400°C/min or slower, 300°C/min or slower, 200°C/min or slower, 100°C/min or slower, 50°C/min or slower, 25°C/min or slower, or 10°C/min or slower, and particularly preferably 5°C/min or slower. In order to obtain dimensional stability over a long period, the above average cooling rate is more preferably 2.5°C/min or slower, 1°C/min or slower, 0.5°C/min or slower, 0.1°C/min or slower, 0.05°C/min or slower, 0.01°C/min or slower, 0.005°C/min or slower, 0.001°C/min or slower, or 0.0005°C/min or slower, and particularly preferably 0.0001°C/min or slower. Except for the case where physical strengthening treatment by air cooing, water cooling or the like is performed, the cooling rates of the crystallized glass from at the surface to in the innermost portion farthest from the surface preferably approximate to each other. The value of the cooling rate in the innermost portion farthest from the surface divided by the cooling rate at the surface is preferably 0.0001 to 1, 0.001 to 1, 0.01 to 1, 0.1 to 1, 0.5 to 1, 0.8 to 1, or 0.9 to 1, and particularly preferably 1. As the above value is closer to 1, residual strain is less likely to occur in all locations of the crystallized glass sample and long-term dimensional stability is more likely to be obtained. The cooling rate at the surface can be estimated by contact thermometry or with a radiation thermometer, while the temperature of the inner portions can be determined by placing the crystallized glass in a high-temperature state into a cooling medium, measuring the heat quantity and rate of heat quantity change of the cooling medium, and making an estimate from the measurement data, the respective specific heats of the crystallized glass and the cooling medium, the thermal conductivity, and so on.

### [Examples]

Hereinafter, the present invention will be described with reference to examples, but the present invention is not limited to the following examples. Tables 1 to 8 show examples (Samples Nos. 1 to 16) of the present invention.

**[Table 1]**

| | | No.1 | No.2 | No.3 | No.4 |
|---|---|---|---|---|---|
| Composition [% by mass] | SiO₂ | 65.60 | 65.80 | 65.80 | 63.60 |
| | Al₂O₃ | 22.30 | 22.30 | 22.30 | 22.30 |
| | Li₂O | 2.70 | 2.50 | 2.30 | 3.70 |
| | Na₂O | 0.32 | 0.32 | 0.32 | 1.30 |
| | K₂O | 0.26 | 0.26 | 0.27 | 0.26 |
| | MgO | 1.66 | 1.82 | 2.02 | 1.66 |
| | CaO | 0.02 | 0.02 | 0.00 | 0.02 |
| | SrO | 0.00 | 0.00 | 0.00 | 0.00 |
| | BaO | 1.16 | 1.17 | 1.17 | 1.16 |
| | ZnO | 0.00 | 0.00 | 0.00 | 0.00 |
| | SnO₂ | 0.28 | 0.27 | 0.27 | 0.28 |
| | ZrO₂ | 2.17 | 2.15 | 2.16 | 2.17 |
| | TiO₂ | 1.96 | 1.96 | 1.95 | 1.96 |
| | P₂O₅ | 1.39 | 1.42 | 1.42 | 1.38 |
| | B₂O₃ | 0.00 | 0.00 | 0.00 | 0.001 |
| | Fe₂O₃ | 0.007 | 0.007 | 0.007 | 0.007 |
| Composition [ppm] | Pt | 1.51 | 1.48 | 1.63 | 1.53 |
| | Rh | 0.03 | 0.02 | 0.001 | 0.03 |
| | Pt+Rh | 1.54 | 1.5 | 1.631 | 1.56 |
| Mg/(Li+Mg) | | 0.381 | 0.421 | 0.468 | 0.310 |
| Li/ (Mg+Ca+Sr+Ba+Na+K) | | 0.790 | 0.697 | 0.608 | 0.841 |
| Mg+Ca+Sr+Ba+Na+K | | 3.418 | 3.586 | 3.780 | 4.398 |
| Al/(Sn+Zr) | | 9.102 | 9.215 | 9.177 | 9.102 |
| (Li+Na+K) /Zr | | 1.512 | 1.433 | 1.338 | 2.424 |
| Ti/Zr | | 0.903 | 0.912 | 0.903 | 0.903 |
| Ti/ (Ti+Fe) | | 0.996 | 0.996 | 0.996 | 0.996 |
| Zr+Ti | | 4.13 | 4.11 | 4.11 | 4.13 |
| Zr/Li | | 0.804 | 0.860 | 0.939 | 0.586 |
| Sn/(Sn+Ti) | | 0.125 | 0.121 | 0.122 | 0.125 |
| Zn/ (Zn+Mg) | | 0.000 | 0.000 | 0.000 | 0.000 |
| (Si+AI+Li)/Si | | 1.381 | 1.377 | 1.374 | 1.409 |
| (Si+Al+Li)/Al | | 4.063 | 4.063 | 4.054 | 4.018 |
| Before Crystallization | | | | | |
| Liquidus Temperature [°C] | | 1423 | 1435 | unmeasured | 1314 |
| Liquidus Viscosity[-] | | 3.52 | 3.46 | unmeasured | 3.90 |
| Primary Phase | | ZrO₂ | mullite | unmeasured | ZrO₂ |
| Density [g/cm³] | | 2.446 | 2.450 | 2.452 | 2.455 |
| Low-Temperature Viscosity | Strain Point[°C] | 681 | 648 | 688 | 650 |
| | Annealing Point[°C] | 738 | 741 | 745 | 724 |
| High-Temperature Viscosity | 10^4[°C] | 1344 | 1345 | 1347 | 1298 |
| | 10^3[°C] | 1521 | 1519 | 1521 | 1476 |
| | 10^2.5[°C] | 1632 | 1629 | 1629 | 1587 |
| | 10^2[°C] | 1765 | 1761 | 1757 | 1720 |
| Transmittance [%] 2 mm thick | 350nm | 77.6 | unmeasured | unmeasured | 76.7 |
| | 360nm | 82.7 | unmeasured | unmeasured | 82.1 |
| | 370nm | 85.7 | unmeasured | unmeasured | 85.2 |
| | 380nm | 87.6 | unmeasured | unmeasured | 87.3 |
| | 555nm | 91.3 | unmeasured | unmeasured | 91.4 |
| | 800nm | 91.5 | unmeasured | unmeasured | 91.5 |
| | 1070nm | 91.7 | unmeasured | unmeasured | 91.7 |
| | 1200nm | 91.7 | unmeasured | unmeasured | 91.7 |
| L* | | 96.5 | unmeasured | unmeasured | 96.5 |
| a* | | -0.1 | unmeasured | unmeasured | -0.1 |
| b* | | 0.5 | unmeasured | unmeasured | 0.5 |

**[Table 2]**

| | | No.1 | No.2 | No.3 | No.4 |
|---|---|---|---|---|---|
| After Crystallization | | | | | |
| Heat Treatment Conditions | | 780°C-1.5h 890°C-1h | | | |
| Density [g/cm³] | | 2.551 | 2.557 | 2.561 | 2.512 |
| Transmittance [%] 2 mm thick | 350nm | 33.9 | 33.4 | 32.6 | 8.0 |
| | 360nm | 58.6 | 57.0 | 55.3 | 26.3 |
| | 370nm | 69.1 | 67.2 | 65.0 | 41.4 |
| | 380nm | 74.6 | 72.7 | 70.4 | 53.5 |
| | 555nm | 88.6 | 88.0 | 87.0 | 88.5 |
| | 800nm | 90.5 | 90.3 | 90.1 | 90.8 |
| | 1070nm | 91.1 | 91.1 | 91.0 | 91.2 |
| | 1200nm | 91.1 | 91.1 | 91.0 | 91.2 |
| L* | | 95.3 | 95.0 | 94.6 | 95.1 |
| a∗ | | -0.3 | -0.3 | -0.3 | -0.8 |
| b* | | 2.2 | 2.7 | 3.3 | 3.6 |
| Precipitated Crystals | | β-quartz solid solution | β-quartz solid solution | β-quartz solid solution | β-quartz solid solution |
| α[ × 10⁻⁷ /°c] | 20-200°C | 9.1 | 11.7 | 13.6 | 9.5 |
| | 20-380°C | 10.1 | 12.7 | 14.7 | 12.7 |
| | 20-750°C | 10.1 | 12.3 | 14.1 | 14.2 |
| Young's Modulus [GPa] | | 93 | unmeasured | unmeasured | unmeasured |
| Modulus of Rigidity [GPa] | | 38 | unmeasured | unmeasured | unmeasured |
| Poisson's Ratio | | 0.22 | unmeasured | unmeasured | unmeasured |
| Breakage | | good | good | good | good |
| Transparency | | good | good | good | good |
| Rate of Density Change between Before and After Crystallization [%] | | 4.3 | 4.4 | 4.4 | 2.3 |
| Rate of Transmittance Change between Before and After Crystallization [%] | | | | | |
| 350nm | | 56.3 | unmeasured | unmeasured | 89.5 |
| 360nm | | 29.1 | unmeasured | unmeasured | 68.0 |
| 370nm | | 19.4 | unmeasured | unmeasured | 51.4 |
| 380nm | | 14.8 | unmeasured | unmeasured | 38.7 |
| 555nm | | 2.9 | unmeasured | unmeasured | 3.1 |
| 800nm | | 1.0 | unmeasured | unmeasured | 0.8 |
| 1070nm | | 0.6 | unmeasured | unmeasured | 0.5 |
| 1200nm | | 0.6 | unmeasured | unmeasured | 0.5 |

**[Table 3]**

| | | No.5 | No.6 | No.7 | No.8 |
|---|---|---|---|---|---|
| Composition [% by mass] | SiO₂ | 66.00 | 65.80 | 65.40 | 65.80 |
| | Al₂O₃ | 21.90 | 21.90 | 21.70 | 21.90 |
| | Li₂O | 3.24 | 3.23 | 3.21 | 3.23 |
| | Na₂O | 0.33 | 1.30 | 0.32 | 0.32 |
| | K₂O | 0.26 | 0.26 | 1.70 | 0.26 |
| | MgO | 1.26 | 0.66 | 0.66 | 0.65 |
| | CaO | 0.02 | 0.02 | 0.02 | 0.02 |
| | SrO | 0.00 | 0.01 | 0.00 | 0.10 |
| | BaO | 1.17 | 1.17 | 1.16 | 1.17 |
| | ZnO | 0.01 | 0.00 | 0.00 | 0.00 |
| | SnO₂ | 0.27 | 0.27 | 0.27 | 0.27 |
| | ZrO₂ | 2.16 | 2.12 | 2.14 | 2.14 |
| | TiO₂ | 1.96 | 1.94 | 1.93 | 1.95 |
| | P₂O₅ | 1.41 | 1.41 | 1.39 | 1.40 |
| | B₂O₃ | 0.00 | 0.00 | 0.00 | 0.00 |
| | Fe₂O₃ | 0.007 | 0.007 | 0.007 | 0.007 |
| Composition [ppm] | Pt | 1.55 | 1.51 | 1.44 | 1.51 |
| | Rh | 0.03 | 0.04 | 0.04 | 0.04 |
| | Pt+Rh | 1.58 | 1.55 | 1.48 | 1.55 |
| Mg/(Li+Mg) | | 0.280 | 0.170 | 0.171 | 0.168 |
| Li/ (Mg+Ca+Sr+Ba+Na+K) | | 1.067 | 0.946 | 0.832 | 1.284 |
| Mg+Ca+Sr+Ba+Na+K | | 3.036 | 3.416 | 3.856 | 2.516 |
| Al/(Sn+Zr) | | 9.012 | 9.163 | 9.004 | 9.087 |
| (Li+Na+K) /Zr | | 1.773 | 2.259 | 2.444 | 1.780 |
| Ti/Zr | | 0.907 | 0.915 | 0.902 | 0.911 |
| Ti/(Ti+Fe) | | 0.996 | 0.996 | 0.996 | 0.996 |
| Zr+Ti | | 4.12 | 4.06 | 4.07 | 4.09 |
| Zr/Li | | 0.667 | 0.656 | 0.667 | 0.663 |
| Sn/(Sn+Ti) | | 0.121 | 0.122 | 0.123 | 0.122 |
| Zn/(Zn+Mg) | | 0.008 | 0.000 | 0.000 | 0.000 |
| (Si+AI+Li)/Si | | 1.381 | 1.382 | 1.381 | 1.382 |
| (Si+Al+Li)/Al | | 4.162 | 4.152 | 4.162 | 4.152 |
| **Before Cry stallization** | | | | | |
| Liquidus Temperature [°C] | | unmeasured | unmeasured | unmeasured | unmeasured |
| Liquidus Viscosity[-] | | unmeasured | unmeasured | unmeasured | unmeasured |
| Primary Phase | | unmeasured | unmeasured | unmeasured | unmeasured |
| Density[g/cm³] | | 2.440 | 2.435 | 2.443 | 2.432 |
| Low-Temperature Viscosity | Strain Point[°C] | 672 | 670 | 674 | 671 |
| | Annealing Point[°C] | 730 | 728 | 732 | 730 |
| High-Temperature Viscosity | 10^4[°C] | 1340 | 1353 | 1346 | 1359 |
| | 10^3[°C] | 1519 | 1535 | 1526 | 1542 |
| | 10^2.5[°C] | 1631 | 1648 | 1640 | 1655 |
| | 10^2[°C] | 1763 | 1780 | 1775 | 1787 |
| Transmittance [%] 2 mm thick | 350nm | unmeasured | unmeasured | unmeasured | unmeasured |
| | 360nm | unmeasured | unmeasured | unmeasured | unmeasured |
| | 370nm | unmeasured | unmeasured | unmeasured | unmeasured |
| | 380nm | unmeasured | unmeasured | unmeasured | unmeasured |
| | 555nm | unmeasured | unmeasured | unmeasured | unmeasured |
| | 800nm | unmeasured | unmeasured | unmeasured | unmeasured |
| | 1070nm | unmeasured | unmeasured | unmeasured | unmeasured |
| | 1200nm | unmeasured | unmeasured | unmeasured | unmeasured |
| L^{∗} | | unmeasured | unmeasured | unmeasured | unmeasured |
| a^{∗} | | unmeasured | unmeasured | unmeasured | unmeasured |
| b^{∗} | | unmeasured | unmeasured | unmeasured | unmeasured |

**[Table 4]**

| | | No.5 | No.6 | No.7 | No.8 |
|---|---|---|---|---|---|
| After Crystallization | | | | | |
| Heat Treatment Conditions | | 780°C-1.5h 890°C-1h | | | |
| Density [g/cm³] | | 2.535 | 2.502 | 2.533 | 2.489 |
| Transmittance [%] 2 mm thick | 350nm | 26.5 | 24.9 | 31.8 | 20.0 |
| | 360nm | 54.6 | 47.2 | 60.4 | 37.7 |
| | 370nm | 67.7 | 58.5 | 72.0 | 48.1 |
| | 380nm | 74.6 | 65.4 | 77.5 | 55.3 |
| | 555nm | 89.5 | 87.1 | 89.4 | 84.2 |
| | 800nm | 90.8 | 90.4 | 90.8 | 89.9 |
| | 1070nm | 91.3 | 91.2 | 91.2 | 91.3 |
| | 1200nm | 91.3 | 91.2 | 91.2 | 91.3 |
| L^{∗} | | 95.7 | 94.6 | 95.7 | 93.3 |
| a^{∗} | | -0.3 | -0.5 | -0.2 | -0.6 |
| b^{∗} | | 1.7 | 4.1 | 1.6 | 6.5 |
| Precipitated Crystals | | β-quartz solid solution | β-quartz solid solution | β-quartz solid solution | β-quartz solid solution |
| α[× 10⁻⁷/°C] | 20-200°C | 3.6 | 4.9 | 2.4 | 6.2 |
| | 20-380°C | 4.9 | 6.2 | 2.9 | 7.8 |
| | 20-750°C | 4.8 | 7.7 | 3.8 | 9.4 |
| Young's Modulus [GPa] | | unmeasured | unmeasured | unmeasured | unmeasured |
| Modulus of Rigidity [GPa] | | unmeasured | unmeasured | unmeasured | unmeasured |
| Poisson's Ratio | | unmeasured | unmeasured | unmeasured | unmeasured |
| Breakage | | good | good | good | good |
| Transparency | | good | good | good | good |
| Rate of Density Change between Before and After Crystallization [%] | | 3.9 | -99.8 | -99.8 | -99.8 |
| Rate of Transmittance Change between Before and After Crystallization [%] | | | | | |
| 350nm | | unmeasured | unmeasured | unmeasured | unmeasured |
| 360nm | | unmeasured | unmeasured | unmeasured | unmeasured |
| 370nm | | unmeasured | unmeasured | unmeasured | unmeasured |
| 380nm | | unmeasured | unmeasured | unmeasured | unmeasured |
| 555nm | | unmeasured | unmeasured | unmeasured | unmeasured |
| 800nm | | unmeasured | unmeasured | unmeasured | unmeasured |
| 1070nm | | unmeasured | unmeasured | unmeasured | unmeasured |
| 1200nm | | unmeasured | unmeasured | unmeasured | unmeasured |

**[Table 5]**

| | | No.9 | No.10 | No.11 | No. 12 |
|---|---|---|---|---|---|
| Composition [% by mass] | SiO₂ | 64.13 | 64.61 | 66.90 | 64.00 |
| | Al₂O₃ | 21.77 | 21.93 | 23.30 | 24.20 |
| | Li₂O | 3.59 | 3.62 | 2.67 | 3.51 |
| | Na₂O | 0.40 | 0.40 | 0.40 | 0.45 |
| | K₂O | 0.29 | 0.29 | 0.00 | 0.30 |
| | MgO | 1.63 | 1.18 | 1.68 | 0.68 |
| | CaO | 1.01 | 0.73 | 0.02 | 0.01 |
| | SrO | 0.00 | 0.00 | 0.00 | 1.14 |
| | BaO | 1.18 | 1.19 | 1.18 | 0.00 |
| | ZnO | 0.00 | 0.00 | 0.02 | 0.61 |
| | SnO₂ | 0.28 | 0.28 | 0.63 | 1.15 |
| | ZrO₂ | 2.16 | 2.17 | 2.62 | 2.23 |
| | TiO₂ | 1.96 | 1.98 | 0.02 | 0.25 |
| | P₂O₅ | 1.37 | 1.38 | 1.40 | 1.38 |
| | B₂O₃ | 0.00 | 0.00 | 0.00 | 0.00 |
| | Fe₂O₃ | 0.014 | 0.014 | 0.007 | 0.007 |
| Composition [ppm] | Pt | 1.44 | 1.51 | 1.55 | 0.01 |
| | Rh | 0.04 | 0.04 | 0.03 | 0.01 |
| | Pt+Rh | 1.48 | 1.55 | 1.58 | 0.02 |
| Mg/(Li+Mg) | | 0.312 | 0.246 | 0.386 | 0.162 |
| Li/ (Mg+Ca+Sr+Ba+Na+K) | | 0.796 | 0.955 | 0.816 | 1.360 |
| Mg+Ca+Sr+Ba+Na+K | | 4.510 | 3.790 | 3.274 | 2.580 |
| Al/(Sn+Zr) | | 8.922 | 8.951 | 7.169 | 7.160 |
| (Li+Na+K)/Zr | | 1.981 | 1.986 | 1.170 | 1.910 |
| Ti/Zr | | 0.907 | 0.912 | 0.008 | 0.112 |
| Ti/(Ti+Fe) | | 0.993 | 0.993 | 0.741 | 0.973 |
| Zr+Ti | | 4.12 | 4.15 | 2.64 | 2.48 |
| Zr/Li | | *0.602* | 0.599 | 0.981 | 0.635 |
| Sn/ (Sn+Ti) | | 0.125 | 0.124 | 0.969 | 0.821 |
| Zn/ (Zn+Mg) | | 0.000 | 0.000 | 0.012 | 0.473 |
| (Si+AI+Li)/Si | | 1.395 | 1.395 | 1.388 | 1.433 |
| (Si+Al+Li)/Al | | 4.111 | 4.111 | 3.986 | 3.790 |

| Before Crystallization | | | | | |
|---|---|---|---|---|---|
| Liquidus Temperature [°C] | | unmeasured | unmeasured | 1416 | unmeasured |
| Liquidus Viscosity[-] | | unmeasured | unmeasured | 3.71 | unmeasured |
| Primary Phase | | unmeasured | unmeasured | ZrO₂ | unmeasured |
| Density[g/cm³] | | 2.450 | 2.450 | 2.447 | unmeasured |
| Low-Temperature Viscosity | Strain Point[°C] | unmeasured | unmeasured | 691 | unmeasured |
| | Annealing Point[°C] | unmeasured | unmeasured | 750 | unmeasured |
| High-Temperature Viscosity | 10^4[°C] | unmeasured | unmeasured | 1369 | 1340 |
| | 10^3[°C] | unmeasured | unmeasured | 1548 | 1518 |
| | 10^2.5[°C] | unmeasured | unmeasured | 1661 | 1631 |
| | 10^2[°C] | unmeasured | unmeasured | 1795 | 1768 |
| Transmittance [%] 2 mm thick | 350nm | unmeasured | unmeasured | 0.0 | unmeasured |
| | 360nm | unmeasured | unmeasured | 0.0 | unmeasured |
| | 370nm | unmeasured | unmeasured | 0.0 | unmeasured |
| | 380nm | unmeasured | unmeasured | 0.0 | unmeasured |
| | 555nm | unmeasured | unmeasured | 0.0 | unmeasured |
| | 800nm | unmeasured | unmeasured | 0.0 | unmeasured |
| | 1070nm | unmeasured | unmeasured | 0.0 | unmeasured |
| | 1200nm | unmeasured | unmeasured | 0.0 | unmeasured |
| L^{∗} | | unmeasured | unmeasured | 96.6 | unmeasured |
| a^{∗} | | unmeasured | unmeasured | 0.0 | unmeasured |
| b^{∗} | | unmeasured | unmeasured | 0.2 | unmeasured |

**[Table 6]**

| | | No.9 | No.10 | No.11 | No.1 2 |
|---|---|---|---|---|---|
| After Crystallization | | | | | |
| Heat Treatment Conditions | | 780°C-1.5h | | 840°C-3h | 810°C-10h |
| | | 890°C-1h | | 920°C-1h | 920°C-3h |
| Density [g/cm³] | | unmeasured | unmeasured | 2.543 | unmeasured |
| Transmittance [%] 2 mm thick | 350nm | unmeasured | unmeasured | 65.2 | 0.0 |
| | 360nm | unmeasured | unmeasured | 67.7 | unmeasured |
| | 370nm | unmeasured | unmeasured | 69.6 | unmeasured |
| | 380nm | unmeasured | unmeasured | 71.3 | unmeasured |
| | 555nm | unmeasured | unmeasured | 71.3 | unmeasured |
| | 800nm | unmeasured | unmeasured | 84.9 | unmeasured |
| | 1070nm | unmeasured | unmeasured | 89.9 | unmeasured |
| | 1200nm | unmeasured | unmeasured | 90.4 | 0.0 |
| L^{∗} | | unmeasured | unmeasured | 93.7 | unmeasured |
| a^{∗} | | unmeasured | unmeasured | -0.3 | unmeasured |
| b^{∗} | | unmeasured | unmeasured | 4.1 | unmeasured |
| Precipitated Crystals | | β-quartz solid solution | β-quartz solid solution | β-quartz solid solution | β-quartz solid solution |
| α[×10⁻⁷/°C] | 20-200°C | 2.7 | 6.7 | 8.1 | unmeasured |
| | 20-380°C | 3.4 | 84 | 8.2 | unmeasured |
| | 20-750°C | 4.7 | 9.4 | 7.2 | unmeasured |
| Young's Modulus [GPa] | | unmeasured | unmeasured | unmeasured | unmeasured |
| Modulus of Rigidity [GPa] | | unmeasured | unmeasured | unmeasured | unmeasured |
| Poisson's Ratio Breakage | | unmeasured good | unmeasured good | unmeasured good | unmeasured good |
| Transparency | | good | good | good | good |

| Rate of Density Change between Before and After Crystallization [%] | | unmeasured | unmeasured | 3.9 | unmeasured |
|---|---|---|---|---|---|
| Rate of Transmittance Change between Befo re and After Crystallization [%] | | | | | |
| 350nm | | unmeasured | unmeasured | 25.7 | unmeasured |
| 360nm | | unmeasured | unmeasured | 24.1 | unmeasured |
| 370nm | | unmeasured | unmeasured | 22.6 | unmeasured |
| 380nm | | unmeasured | unmeasured | 21.2 | unmeasured |
| 555nm | | unmeasured | unmeasured | 22.0 | unmeasured |
| 800nm | | unmeasured | unmeasured | 7.1 | unmeasured |
| 1070nm | | unmeasured | unmeasured | 1.4 | unmeasured |
| 1200nm | | unmeasured | unmeasured | 1.1 | unmeasured |

**[Table 7]**

| | | No. 13 | No.14 | No.15 | No.16 |
|---|---|---|---|---|---|
| Composition [% by mass] | SiO₂ | 65.90 | 65.90 | 65.90 | 65.90 |
| | Al₂O₃ | 22.40 | 22.40 | 22.40 | 22.40 |
| | Li₂O | 2.70 | 2.70 | 2.70 | 2.70 |
| | Na₂O | 0.31 | 0.31 | 0.31 | 0.31 |
| | K₂O | 0.26 | 0.26 | 0.26 | 0.26 |
| | MgO | 1.63 | 1.63 | 1.63 | 1.63 |
| | CaO | 0.00 | 0.00 | 0.00 | 0.00 |
| | SrO | 0.00 | 0.00 | 0.00 | 0.00 |
| | BaO | 1.14 | 1.14 | 1.14 | 1.14 |
| | ZnO | 0.00 | 0.00 | 0.00 | 0.00 |
| | SnO₂ | 0.23 | 0.23 | 0.23 | 0.23 |
| | ZrO₂ | 2.10 | 2.10 | 2.10 | 2.10 |
| | TiO₂ | 1.93 | 1.93 | 1.93 | 1.93 |
| | P₂O₅ | 1.39 | 1.39 | 1.39 | 1.39 |
| | B₂O₃, | 0.00 | 0.00 | 0.00 | 0.00 |
| | Fe₂O₃ | 0.006 | 0.006 | 0.006 | 0.006 |
| Composition [ppm] | Pt | 0.32 | 0.57 | 0.74 | 1.2 |
| | Rh | 0.01 | 0.01 | 0.43 | 0.44 |
| | Pt+Rh | 0.33 | 0.58 | 1.17 | 1.64 |
| Mg/(Li+Mg) | | 0.376 | 0.376 | 0.376 | 0.376 |
| Li/ (Mg+Ca+Sr+Ba+Na+K) | | 0.808 | 0.808 | 0.808 | 0.808 |
| Mg+Ca+Sr+Ba+Na+K | | 3.340 | 3.340 | 3.340 | 3.340 |
| Al/(Sn+Zr) | | 9.614 | 9.614 | 9.614 | 9.614 |
| (Li+Na+K)/Zr | | 1.557 | 1.557 | 1.557 | 1.557 |
| Ti/Zr | | 0.919 | 0.919 | 0.919 | 0.919 |
| Ti/(Ti+Fe) | | 0.997 | 0.997 | 0.997 | 0.997 |
| Zr+Ti | | 4.03 | 4.03 | 4.03 | 4.03 |
| Zr/Li | | 0.778 | 0.778 | 0.778 | 0.778 |
| Sn/(Sn+Ti) | | 0.106 | 0.106 | 0.106 | 0.106 |
| Zn/ (Zn+Mg) | | 0.000 | 0.000 | 0.000 | 0.000 |
| (Si+AI+Li)/Si | | 1.381 | 1.381 | 1.381 | 1.381 |
| (Si+Al+Li)/Al | | 4.063 | 4.063 | 4.063 | 4.063 |

| **Before Crystallization** | | | | | |
|---|---|---|---|---|---|
| Liquidus Temperature [°C] | | 1423 | 1423 | 1423 | 1423 |
| Liquidus Viscosity[-] | | unmeasured | unmeasured | unmeasured | unmeasured |
| Primary Phase | | ZrO2 | ZrO2 | ZrO2 | ZrO2 |
| Density [g/cm³] | | 2.445 | 2.445 | 2.445 | 2.445 |
| Low-Temperature Viscosity | Strain Point[°C] | 681 | 681 | 681 | 681 |
| | Annealing Point[°C] | 738 | 738 | 738 | 738 |
| High-Temperature Viscosity | 10^4[°C] | 1344 | 1344 | 1344 | 1344 |
| | 10^3[°C] | 1521 | 1521 | 1521 | 1521 |
| | 10^2.5[°C] | 1632 | 1632 | 1632 | 1632 |
| | 10^2[°C] | unmeasured | unmeasured | unmeasured | unmeasured |
| Transmittance [%] 2 mm thick | 350nm | unmeasured | unmeasured | unmeasured | unmeasured |
| | 360nm | unmeasured | unmeasured | unmeasured | unmeasured |
| | 370nm | unmeasured | unmeasured | unmeasured | unmeasured |
| | 380nm | unmeasured | unmeasured | unmeasured | unmeasured |
| | 555nm | unmeasured | unmeasured | unmeasured | unmeasured |
| | 800nm | unmeasured | unmeasured | unmeasured | unmeasured |
| | 1070nm | unmeasured | unmeasured | unmeasured | unmeasured |
| | 1200nm | unmeasured | unmeasured | unmeasured | unmeasured |
| L^{∗} | | unmeasured | unmeasured | unmeasured | unmeasured |
| a^{∗} | | unmeasured | unmeasured | unmeasured | unmeasured |
| b^{∗} | | unmeasured | unmeasured | unmeasured | unmeasured |

**[Table 8]**

| | | No.13 | No.14 | No.15 | No.16 |
|---|---|---|---|---|---|
| After Crystallization | | | | | |
| Heat Treatment Conditions | | 765°C-1.5h | | | |
| | | 935°C-1h | | | |
| Density [g/cm³] | | 2.575 | 2.574 | 2.573 | 2.573 |
| Transmittance [%] 2 mm thick | 350nm | 49.7 | 46.3 | 47.8 | 46.0 |
| | 360nm | unmeasured | unmeasured | unmeasured | unmeasured |
| | 370nm | unmeasured | unmeasured | unmeasured | unmeasured |
| | 380nm | unmeasured | unmeasured | unmeasured | unmeasured |
| | 555nm | unmeasured | unmeasured | unmeasured | unmeasured |
| | 800nm | unmeasured | unmeasured | unmeasured | unmeasured |
| | 1070nm | unmeasured | unmeasured | unmeasured | unmeasured |
| | 1200nm | 91.1 | 90.9 | 90.9 | 90.9 |
| L* | | unmeasured | unmeasured | unmeasured | unmeasured |
| a* | | unmeasured | unmeasured | unmeasured | unmeasured |
| b* | | unmeasured | unmeasured | unmeasured | unmeasured |
| Precipitated Crystals | | β-quartz solid solution | β-quartz solid solution | β-quartz solid solution | β-quartz solid solution |
| *α*[× 10⁻⁷/°C] | 20-200°C | 12.8 | 12.8 | 12.8 | 12.8 |
| | 20-380°C | unmeasured | unmeasured | unmeasured | unmeasured |
| | 20-750°C | unmeasured | unmeasured | unmeasured | unmeasured |
| Young's Modulus [GPa] | | unmeasured | unmeasured | unmeasured | unmeasured |
| Modulus of Rigidity [GPa] | | unmeasured | unmeasured | unmeasured | unmeasured |
| Poisson's Ratio | | unmeasured | unmeasured | unmeasured | unmeasured |
| Breakage | | good | good | good | good |
| Transparency | | good | good | good | good |
| Rate of Density Change between Before and After Crystallization [%] | | 5_{.}3 lization [%] | 5.3 | 5.2 | 5.2 |

| Rate of Transmittance Change between Before and After Crystal | | | | | |
|---|---|---|---|---|---|
| 350nm | | unmeasured | unmeasured | unmeasured | unmeasured |
| 360nm | | unmeasured | unmeasured | unmeasured | unmeasured |
| 370nm | | unmeasured | unmeasured | unmeasured | unmeasured |
| 380nm | | unmeasured | unmeasured | unmeasured | unmeasured |
| 555nm | | unmeasured | unmeasured | unmeasured | unmeasured |
| 800nm | | unmeasured | unmeasured | unmeasured | unmeasured |
| 1070nm | | unmeasured | unmeasured | unmeasured | unmeasured |
| 1200nm | | unmeasured | unmeasured | unmeasured | unmeasured |

First, raw materials were formulated in the form of an oxide, a hydroxide, a carbonate or a nitrate or other forms so that each of glasses having respective compositions shown in Tables 1, 3, 5, and 7 was obtained, thus obtaining a glass batch. The obtained glass batch was put into a crucible containing platinum and rhodium, a rhodium-free strengthened-platinum crucible, a refractory crucible or a quartz crucible, melted therein at 1600°C for 4 to 100 hours, then melted at an increased temperature of 1650 to 1680°C for 0.5 to 20 hours, formed with a thickness of 5 mm by roll forming, and subjected to heat treatment at 700°C for 30 minutes using a slow-cooling furnace, and then the slow-cooling furnace was cooled at a rate of 100°C/h to room temperature, thus obtaining a crystallizable glass. The melting was performed by the electric melting method widely used for the development of glass materials.

It has been confirmed that, with the use of a glass composition of Sample No. 11, the glass can be melted by heating with a burner, ohmic heating, laser irradiation, or so on, and has also been confirmed that the glass sample can be subsequently formed into a semispherical, spherical, fibrous, powdered, thin-plate-like, tubular or valve-like shape by pressing, redrawing, spraying, a roll process, a film process, an overflow (fusion) process, a hand-brown process or other processes. It has also been confirmed that, with the use of a glass composition of Sample No. 13, the glass melt can be solidified into a plate by flowing it onto a liquid having a larger specific gravity than Sample No. 13 and subsequently cooling it. The glasses produced by every method described above could be crystallized under the conditions shown in the tables.

The respective contents of Pt and Rh in the produced samples were analyzed with an ICP-MS instrument (Agilent 8800 manufactured by Agilent Technologies, Inc.). First, the produced glass sample was ground and wetted with pure water and, then, perchloric acid, nitric acid, sulfuric acid, hydrofluoric acid or the like was added to the glass sample to fuse the glass sample with the acid. Thereafter, the respective contents of Pt and Rh in the sample were measured with ICP-MS. Based on calibration curves made using prepared Pt and Rh solutions the concentrations of which had been known, the respective contents of Pt and Rh in each measurement sample were determined. The measurement modes were a He gas/HMI (low mode) for Pt and a HEHe gas/HMI (middle mode) for Rh. The mass numbers were 198 for Pt and 103 for Rh. The content of Li₂O in the produced samples was analyzed with an atomic absorption spectrometer (contrAA 600 manufactured by Analytik Jena) . The manner of the analysis for this component was fundamentally the same as the analysis for Pt and Rh, such as the flow of fusion of the glass sample and the use of the calibration curve. With respect to the other components, the content of each component was measured with ICP-MS or atomic absorption spectrometry, like Pt, Rh, and Li₂O, or otherwise a calibration curve was made with an XRF analyzer (ZSX Primus IV manufactured by Rigaku Corporation) using as a sample for determining the calibration curve a glass sample the concentration of which had been known by previously examining it with an ICP-MS or atomic absorption spectrometer and the actual content of the component was determined from an XRF analysis value of the measurement sample based on the calibration curve. In doing XRF analysis, the tube voltage, the tube current, the exposure time, and so on were adjusted according to the analytical component as needed.

Each of the produced glasses was subjected to nucleation under the heat treatment conditions described in the tables, then subjected to crystal growth, and thus crystallized. The obtained crystallized glasses were evaluated in terms of transmittance, lightness, chromaticity, type of precipitated crystals, coefficient of thermal expansion, liquidus temperature, density, Young's modulus, modulus of rigidity, Poisson's ratio, breakage, and transparency. Furthermore, as to the crystallizable glasses before crystallization, the transmittance, the lightness, the chromaticity, and so on were measured in the same manners as for the crystallized glasses. In addition, the crystallizable glasses were measured in terms of viscosity and liquidus temperature.

The transmittance was evaluated by measuring a crystallized glass plate optically polished on both sides to have a thickness of 2 mm with a spectro-photometer. A spectro-photometer V-670 manufactured by JASCO Corporation was used for the measurement. The spectro-photometer V-670 was fitted with an integrating sphere unit "ISN-723" and, therefore, the measured transmittance corresponds to the total transmittance. Furthermore, the measurement wavelength range was 200 to 1500 nm, the scan speed was 200 nm/min, the sampling pitch was 1 nm, and the band widths were 5 nm in a wavelength range of 200 to 800 nm and 20 nm in the other wavelength range. Prior to the measurement, a baseline correction (adjustment to 100%) and a dark measurement (adjustment to 0%) were performed. The dark measurement was conducted in a state where a barium sulfate plate attached to ISN-723 was removed. Using the measured transmittance, tristimulus values X, Y, and Z were calculated based on JIS Z 8781-4:2013 and its corresponding International Standard. The lightness and chromaticity were calculated from each stimulus value (light source C/10°).

The precipitated crystals were evaluated with an X-ray diffractometer (an automated multipurpose horizontal X-ray diffractometer SmartLab manufactured by Rigaku corporation). The scan mode was 2θ/θ measurement, the scan type was a continuous scan, the scattering and divergent slit width was 1°, the light-receiving slit width was 0.2°, the measurement range was 10 to 60°, the measurement step was 0.1°, and the scan speed was 5°/min. The type of major crystalline phase and the crystal grain size were evaluated using analysis software installed on the instrument package.

The coefficient of thermal expansion was evaluated, using a crystallized glass sample processed with a length of 20 mm and a diameter of 3.8 mm, from its average coefficients of linear thermal expansion measured in a temperature range of 20 to 200°C, a temperature range of 20 to 380°C, and a temperature range of 20 to 750°C. A dilatometer manufactured by NETZSCH was used for the measurement.

The liquidus temperature was evaluated in the following manner. First, glass powder sized between 300 micrometers and 500 micrometers was filled in a platinum boat with approximately 120 × 20 × 10 mm, the boat was put into an electric furnace, and the glass powder was melted at 1600°C for 30 minutes in the furnace. Thereafter, the boat was moved into an electric furnace having a linear temperature gradient and placed therein for 20 hours to precipitate devitrification. The measurement sample was air cooled to room temperature, the devitrification precipitated at the interface between the platinum boat and the glass was observed, and the temperature at the portion where the devitrification was precipitated was calculated as a liquidus temperature from the temperature gradient graph of the electric furnace. Furthermore, the obtained liquidus temperature was interpolated into the high-temperature viscosity curve of the glass and the viscosity in the viscosity curve corresponding to the liquidus temperature was determined as a liquidus viscosity. The primary phases of the glasses shown in the tables were analyzed using X-ray diffraction, composition analysis, and so on (with a scanning electron microscope S-3400N Type II manufactured by Hitachi High-Tech Corporation and EMAX ENERGY EX-250X manufactured by Horiba, Ltd.).

The density was measured by the Archimedes's method.

The strain point and the annealing point were evaluated by the fiber elongation method. The fiber sample was made by hand-drawing from the crystallizable glass.

The high-temperature viscosity was evaluated by the platinum ball pulling-up method. In making the evaluation, a mass of glass sample was crushed to an appropriate size and loaded into an alumina-made crucible so as not to entrain air bubbles as much as possible. Subsequently, the alumina crucible was heated to turn the sample into a melt, the measured values of the glass viscosity at a plurality of temperatures were determined, the constant of the Vogel-Fulcher equation was calculated, a viscosity curve was created, and the temperature at each viscosity was calculated from the viscosity curve.

The Young's modulus, the modulus of rigidity, and the Poisson's ratio were measured, using a plate-like sample (40 mm × 20 mm × 2 mm) surface-polished with a polishing solution containing 1200 mesh alumina powder dispersed therein, with a free resonance elastic modulus measurement device (JE-RT3 manufactured by Nihon Techno-Plus Corporation) in a room temperature environment.

The evaluation on breakage was made by considering a crystallized glass having been visually confirmed to have no breakage as "good" and considering a crystallized glass having been visually confirmed to have a breakage as "poor".

The evaluation on transparency was made by considering a crystallized glass having been found to be visually transparent as "good" and considering a crystallized glass having been found not to be visually transparent as "poor".

As is obvious from Tables 1 to 8, each of the crystallized glasses of Samples Nos. 1 to 16 had a β-quartz solid solution precipitated as a major crystalline phase and showed a high transmittance in a ultraviolet to infrared range and a low coefficient of thermal expansion. Furthermore, the crystallized glasses were confirmed to have no breakage and were transparent.

### [Industrial Applicability]

The Li₂O-Al₂O₃-SiO₂-based crystallized glass according to the present invention has a high permeability to light in a ultraviolet to infrared range and a low thermal expansion and is therefore suitable for semiconductor substrates. Furthermore, the Li₂O-Al₂O₃-SiO₂-based crystallized glass according to the present invention is also suitable for front windows of oil stoves, wood stoves and the like, substrates for high-technology products, such as color filter substrates and image sensor substrates, setters for firing electronic components, light diffuser plates, furnace core tubes for producing semiconductors, masks for producing semiconductors, optical lenses, dimension measurement members, communication members, construction members, chemical reaction containers, electromagnetic cooker top plates, heat-resistant plates and utensils, heat-resistant covers, fire door windows, members for astrometric telescopes, and members for space optics.

## Claims

1. A Li₂O-Al₂O₃-SiO₂-based crystallized glass containing, in terms of % by mass, 40 to 90% SiO₂, 5 to 30% Al₂O₃, 1 to 10% Li₂O, 0 to 20% SnO₂, 0 to 5% ZrO₂, 0 to 10% MgO, 0 to 10% CaO, 0 to 10% SrO, 0 to 10% BaO, 0 to 10% Na₂O, 0 to 10% K₂O, 0 to 10% P₂O₅, and 0 to 4% TiO₂, a mass ratio of Li₂O/ (MgO+CaO+SrO+BaO+Na₂O+K₂O) being 3 or less.

2. The Li₂O-Al₂O₃-SiO₂-based crystallized glass according to claim 1, further containing, in terms of % by mass, 0 to 10% ZnO and 0 to 10% B₂O₃.

3. The Li₂O-Al₂O₃-SiO₂-based crystallized glass according to claim 1 or 2, further containing, in terms of % by mass, 0.10% or less Fe₂O₃.

4. The Li₂O-Al₂O₃-SiO₂-based crystallized glass according to any one of claims 1 to 3, wherein a mass ratio of MgO/ (Li₂O+MgO) is 0.15 or more.

5. The Li₂O-Al₂O₃-SiO₂-based crystallized glass according to any one of claims 1 to 4, containing, in terms of % by mass, 2% or more MgO+CaO+SrO+BaO+Na₂O+K₂O.

6. The Li₂O-Al₂O₃-SiO₂-based crystallized glass according to any one of claims 1 to 5, containing, in terms of % by mass, 1.5 to 6.7% ZrO₂+TiO₂.

7. The Li₂O-Al₂O₃-SiO₂-based crystallized glass according to any one of claims 1 to 6, wherein a mass ratio of (SiO₂+Al₂O₃+Li₂O)/SiO₂ is less than 1.553.

8. The Li₂O-Al₂O₃-SiO₂-based crystallized glass according to any one of claims 1 to 7, wherein a mass ratio of (SiO₂+Al₂O₃+Li₂O) /Al₂O₃ is more than 3.251.

9. The Li₂O-Al₂O₃-SiO₂-based crystallized glass according to any one of claims 1 to 8, wherein a mass ratio of ZrO₂/Li₂O is 0.4 or more.

10. The Li₂O-Al₂O₃-SiO₂-based crystallized glass according to any one of claims 1 to 9, wherein a mass ratio of SnO₂/ (SnO₂+TiO₂) is 0.092 or more.

11. The Li₂O-Al₂O₃-SiO₂-based crystallized glass according to any one of claims 1 to 10, wherein a mass ratio of ZnO/ (ZnO+MgO) is 0.9 or less.

12. The Li₂O-Al₂O₃-SiO₂-based crystallized glass according to any one of claims 1 to 11, wherein a mass ratio of Al₂O₃/ (SnO₂+ZrO₂) is more than 7.1.

13. The Li₂O-Al₂O₃-SiO₂-based crystallized glass according to any one of claims 1 to 12, wherein a mass ratio of (Li₂O+Na₂O+K₂O)/ZrO₂ is 3.0 or less.

14. The Li₂O-Al₂O₃-SiO₂-based crystallized glass according to any one of claims 1 to 13, wherein a mass ratio of TiO₂/ZrO₂ is 0.0001 to 5.0.

15. The Li₂O-Al₂O₃-SiO₂-based crystallized glass according to any one of claims 1 to 14, wherein a mass ratio of TiO₂/ (TiO₂+Fe₂O₃) is 0.001 to 0.999.

16. The Li₂O-Al₂O₃-SiO₂-based crystallized glass according to any one of claims 1 to 15, containing, in terms of % by mass, less than 0.05% HfO₂+Ta₂O₅.

17. The Li₂O-Al₂O₃-SiO₂-based crystallized glass according to any one of claims 1 to 16, containing, in terms of % by mass, 7 ppm or less Pt.

18. The Li₂O-Al₂O₃-SiO₂-based crystallized glass according to any one of claims 1 to 17, containing, in terms of % by mass, 7 ppm or less Rh.

19. The Li₂O-Al₂O₃-SiO₂-based crystallized glass according to any one of claims 1 to 18, containing, in terms of % by mass, 9 ppm or less Pt+Rh.

20. The Li₂O-Al₂O₃-SiO₂-based crystallized glass according to any one of claims 1 to 19, wherein a β-quartz solid solution is precipitated as a major crystalline phase.

21. The Li₂O-Al₂O₃-SiO₂-based crystallized glass according to any one of claims 1 to 20, having a coefficient of thermal expansion of -20 × 10⁻⁷/°C to 30 × 10⁻⁷/°C at 20 to 200°C.

22. The Li₂O-Al₂O₃-SiO₂-based crystallized glass according to any one of claims 1 to 21, having a coefficient of thermal expansion of -20 × 10⁻⁷/°C to 30 × 10⁻⁷/°C at 20 to 380°C.

23. The Li₂O-Al₂O₃-SiO₂-based crystallized glass according to any one of claims 1 to 22, having a coefficient of thermal expansion of -20 × 10⁻⁷/°C to 30 × 10⁻⁷/°C at 20 to 750°C.

24. The Li₂O-Al₂O₃-SiO₂-based crystallized glass according to any one of claims 1 to 23, having a transparent appearance.

25. The Li₂O-Al₂O₃-SiO₂-based crystallized glass according to any one of claims 1 to 24, having a transmittance of 1% or more at a thickness of 2 mm and a wavelength of 360 nm.

26. The Li₂O-Al₂O₃-SiO₂-based crystallized glass according to any one of claims 1 to 25, having a transmittance of 10% or more at a thickness of 2 mm and a wavelength of 555 nm.

27. The Li₂O-Al₂O₃-SiO₂-based crystallized glass according to any one of claims 1 to 26, having a transmittance of 35% or more at a thickness of 2 mm and a wavelength of 1200 nm.

28. The Li₂O-Al₂O₃-SiO₂-based crystallized glass according to any one of claims 1 to 27, having a liquidus temperature of 1500°C or below.

29. The Li₂O-Al₂O₃-SiO₂-based crystallized glass according to any one of claims 1 to 28, having a rate of density change of 1.1 to 10% between before and after crystallization.

30. The Li₂O-Al₂O₃-SiO₂-based crystallized glass according to any one of claims 1 to 29, having a transmittance of 1% or more at a thickness of 2 mm and a wavelength of 360 nm and a coefficient of thermal expansion of -10 × 10⁻⁷/°C to 30 × 10⁻⁷/°C at 20 to 200°C.
